(19) Europäisches Patentamt
European Patent Office
Office européen des brevets

(11) **EP 4 434 743 A1**

(12) **EUROPÄISCHE PATENTANMELDUNG**

(43) Veröffentlichungstag:
**25.09.2024  Patentblatt 2024/39**

(51) Internationale Patentklassifikation (IPC):
**B32B 7/05** (2019.01)    **B32B 7/12** (2006.01)
**B32B 27/08** (2006.01)   **B32B 27/30** (2006.01)
**B32B 27/36** (2006.01)

(21) Anmeldenummer: 24160817.3

(22) Anmeldetag: **01.03.2024**

(52) Gemeinsame Patentklassifikation (CPC):
**G09F 13/18; B32B 7/05; B32B 7/12; B32B 27/08; B32B 27/308; B32B 27/365; E06B 11/00; G07C 9/15;** B32B 2307/40; B32B 2307/412; B32B 2307/416; B32B 2307/418; B32B 2307/538

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **21.03.2023  DE 102023107095**

(71) Anmelder: **Scheidt & Bachmann GmbH**
**41238 Mönchengladbach (DE)**

(72) Erfinder: **Berten, Julius**
**41179 Mönchengladbach (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(54) **SPERRKÖRPERANORDNUNG FÜR EINE DURCHGANGSSPERRE EINES ZUGANGSKONTROLLSYSTEMS**

(57)    Die Anmeldung betrifft einen Sperrkörperverbund für eine Sperrkörperanordnung einer Durchgangssperre eines Zugangskontrollsystems, umfassend: mindestens einen ersten im Wesentlichen optisch transparenten Sperrkörper mit einer ersten einen ersten Lichteinkoppelbereich aufweisenden Seitenfläche, einer zweiten mindestens einen ersten Lichtauskoppelbereich aufweisenden Seitenfläche und einer dritten eine erste Sichtfläche bildenden und der zweiten Seitenfläche gegenüberliegenden Seitenfläche, mindestens einen zweiten im Wesentlichen optisch transparenten Sperrkörper mit einer ersten einen zweiten Lichteinkoppelbereich aufweisenden Seitenfläche, einer zweiten mindestens einen zweiten Lichtauskoppelbereich aufweisenden Seitenfläche und einer dritten der zweiten Seitenfläche gegenüberliegenden Seitenfläche, wobei die dritte Seitenfläche des zweiten Sperrkörpers mit der zweiten Seitenfläche des ersten Sperrkörpers verbunden ist, wobei zwischen der dritten Seitenfläche des zweiten Sperrkörpers und der zweiten Seitenfläche des ersten Sperrkörpers eine zumindest teilweise im Wesentlichen optische transparente Trennschicht angeordnet ist, und wobei durch den ersten Lichtauskoppelbereich und den zweiten Lichtauskoppelbereich ausgekoppeltes Licht an der dritten Seitenfläche des ersten Sperrkörpers sichtbar ist.

Fig.1a

**Beschreibung**

Die Anmeldung betrifft einen Sperrköperverbund für eine Sperrkörperanordnung einer Durchgangssperre eines Zugangskontrollsystems. Darüber hinaus betrifft die Anmeldung ein Sperrkörperverbundset, eine Sperrkörperanordnung, eine Durchgangssperre eines Zugangskontrollsystems und ein (computerimplementiertes) Verfahren zum Betreiben einer Durchgangssperre.

Zugangskontrollsysteme bzw. Zutrittskontrollsysteme zum Kontrollieren eines Zugangs von einem ersten Bereich in einen zweiten Bereich sind aus dem Stand der Technik bekannt. Beispielsweise kann der Zugang (bzw. Eingang) von einem unkontrollierten Bereich zu einem kontrollierten Bereich und/oder der Zugang (bzw. Ausgang) von einem kontrollierten Bereich zu einem unkontrollierten Bereich mit Hilfe eines Zugangskontrollsystems gesteuert werden.

Zugangskontrollsysteme gemäß der vorliegenden Anmeldung dienen also dazu, ein Eintreten bzw. Hineingehen in einen kontrollierten Bereich durch einen Nutzer zu kontrollieren bzw. ein Austreten bzw. Hinausgehen aus einem kontrollierten Bereich durch einen Nutzer zu kontrollieren. Ein anmeldungsgemäßes Zugangskontrollsystem ist insbesondere kein Zufahrtssystem, bei dem ein Einfahren in einen kontrollierten Bereich durch ein Fahrzeug bzw. ein Ausfahren aus einem kontrollierten Bereich durch ein Fahrzeug kontrolliert wird.

Ein Zugangskontrollsystem verfügt in der Regel über mindestens eine Durchgangssperre (auch als Gate bezeichnet). Eine Durchgangssperre ist eingerichtet zum selektiven Versperren und zum selektiven Freigeben eines Einlasses (also insbesondere das Ermöglichen eines Eintretens) von einem ersten Bereich zu einem zweiten Bereich. Eine Durchgangssperre kann insbesondere sicherstellen, dass nur autorisierte Nutzer einen Eingang und/oder Ausgang eines kontrollierten Bereichs passieren bzw. durchgehen können, um beispielsweise in den kontrollierten Bereich zu gelangen und/oder den kontrollierten Bereich zu verlassen.

Zugangskontrollsysteme werden beispielsweise bei Personentransportsystemen eingesetzt, aber auch bei anderen Anwendungen, bei denen eine Berechtigung von Nutzern kontrolliert werden soll, wie zum Beispiel bei Sport-, Kultur- und/oder Freizeitveranstaltungen. Zugangskontrollsysteme können auch dazu eingerichtet sein, die Berechtigung eines Nutzers zum Aufenthalt in einem kontrollierten Bereich zu überprüfen. Das Überprüfungsergebnis kann angezeigt werden, beispielsweise durch ein Display einer Durchgangssperre.

Bekannte Durchgangssperren sind dazu eingerichtet, eine Zugangsberechtigung eines Nutzers vor einer Freigabe eines Passierens der Durchgangssperre zu prüfen. Beispielsweise sind Zugangskontrollsysteme bekannt, bei denen ein Zugangsmedium eines Nutzers vor einer Freigabe geprüft wird. Zum Kontrollieren bzw. Prüfen der Berechtigung des Nutzers zum Aufenthalt in einem kontrollierten Bereich kann eine Durchgangsperre mindestens eine Schnittstelleneinrichtung umfassen. Die Schnittstelleneinrichtung ist eingerichtet zum Empfangen einer Zugangsberechtigung des Nutzers, die beispielsweise in dem Zugangsmedium gespeichert ist, oder zum Empfang einer Nutzeridentifikation, die mit einer systemseitig hinterlegten Zugangsberechtigung verknüpft ist, oder die ein Zahlmittel repräsentiert, mit der die Nutzung des kontrollierten Bereichs bezahlt werden kann.

Eine Durchgangssperre umfasst in der Regel mindestens eine Basis und mindestens eine an der Basis beweglich angeordnete Sperrkörperanordnung. Aus dem Stand der Technik ist es insbesondere bekannt, dass die Sperrkörperanordnung durch einen plattenförmigen bzw. scheibenförmigen Sperrkörper gebildet sein kann. Dieser Sperrkörper kann bewegt werden, beispielsweise durch einen in der Basis integrierten Aktor (z.B. ein Elektromotor). Der Sperrkörper kann insbesondere zwischen einer geöffneten Position und einer geschlossenen Position bewegt werden. In der geöffneten Position ist insbesondere der Durchgang durch die Durchgangssperre freigegeben, ein Nutzer kann also durch die Durchgangssperre gehen. In der geschlossenen Position ist insbesondere der Durchgang versperrt, ein Nutzer wird also an dem Durchgehen der Durchgangssperre (physisch) gehindert.

In einem Ausgangszustand ist eine Durchgangssperre in der Regel gesperrt. Wie beschrieben wurde, bedeutet dies, dass die Sperrkörperanordnung den Nutzer am Durchgehen durch die Durchgangssperre physisch hindert. In anderen Fällen kann eine Durchgangssperre im Ausgangszustand geöffnet sein und sich nur dann schließen, wenn ein Nutzer ohne eine gültige Zugangsberechtigung bzw. einen gültigen Zugangsmedium versucht, die Durchgangssperre zu passieren. Ohne Beschränkung der Allgemeinheit wird nachfolgend davon ausgegangen, dass eine Durchgangssperre im Ausgangszustand gesperrt ist und bei einer positiven Prüfung der Zugangsberechtigung eines Nutzers für das Durchgehen des Nutzers geöffnet wird.

Regelmäßig wird eine Durchgangssperre nur in eine Durchgangsrichtung betrieben, also in einem bestimmten Durchgangsrichtungszustand. Dies meint, dass Nutzer eine Durchgangsperre nur in eine Richtung (ordnungsgemäß) passieren können. Beispielsweise kann die Durchgangssperre in diesem Betriebszustand nur ein Eintreten in den kontrollierten Bereich ermöglichen oder nur ein Austreten aus dem kontrollierten Bereich.

Die Durchgangsrichtung einer Durchgangssperre bzw. der Durchgangsrichtungszustand kann jedoch während des Betriebs geändert werden, um beispielsweise während einer ersten Zeitdauer ein Passieren der Durchgangssperre in eine erste Durchgangsrichtung und während einer anderen Zeitdauer ein Passieren der Durchgangssperre in die entgegengesetzte Durchgangsrichtung bereitzustellen. Für die Nutzer ist es jedoch oft problematisch, zu erkennen, in welche Richtung eine Durchgangssperre (augenblicklich) betrieben wird. Zwar ist es aus dem Stand der Technik bekannt, auf einem (kleinen) Bildschirm bzw. Display der Durchgangssperre anzuzeigen, ob ein Passieren der Durchgangssperre in der gewünschten Durchgangsrichtung eines Nutzers an der Durchgangssperre möglich ist oder nicht. Insbesondere ist es für die Nutzer bei einer Reihe von nebeneinander angeordneten Durchgangssperren ("Gate Array") oft problematisch, zu erkennen, wo sich diejenigen Durchgangssperren befinden, die (augenblicklich) in der vom Nutzer gewünschten Durchgangsrichtung betrieben werden.

Jedoch ist dieses Anzeigen für den Nutzer häufig erst direkt vor der Durchgangssperre ausreichend sichtbar. Zudem sind auch defekte oder aus anderen Gründen augenblicklich nicht einsatzbereite Durchgangssperren für den Nutzer häufig erst dann erkennbar, wenn der Nutzer sich unmittelbar an der Durchgangssperre befindet. Dies führt zum einem zu einem reduzierten Nutzerkomfort. Zum anderen reduziert dies den Durchsatz durch die mindestens eine Durchgangssperre, insbesondere reduziert dies bei fehlender Übersicht bzw. Orientierung der Nutzer auch den Gesamtdurchsatz durch ein Gate Array.

Aus der US 2017/0205552 A1 ist eine Sperrkörperanordnung mit zwei transparenten und miteinander verbundenen Sperrkörpern bekannt, wobei eine optische Trennschicht zwischen diesen Sperrkörpern angeordnet ist. Die Sperrkörperanordnung verfügt über eine Lichtquellenvorrichtung, wobei in den ersten Sperrkörper an einer ersten Seitenfläche des ersten Sperrkörpers eingekoppeltes Licht mittels eines Lichtauskoppelbereichs sichtbar ist an einer zweiten Seitenfläche des ersten Sperrkörpers, die die Vorderseite der Sperrkörperanordnung bildet. Ein in den zweiten Sperrkörper an einer ersten Seitenfläche des zweiten Sperrkörpers eingekoppeltes Licht ist gemäß der US 2017/0205552 A1 mittels eines Lichtauskoppelbereichs sichtbar an einer zweiten Seitenfläche des zweiten Sperrkörpers, die die Rückseite der Sperrkörperanordnung bildet. Hierdurch ist es möglich, ein bestimmtes erstes Symbol an der Vorderseite der Sperrkörperanordnung anzuzeigen, während an der Rückseite der Sperrkörperanordnung ein anderes Symbol angezeigt werden kann.

Auch wenn bei einer entsprechend gebildeten Sperrkörperanordnung für einen Nutzer die Wahrnehmung an einer Durchgangssperre verbessert ist, bleibt die Wahrnehmung der Beleuchtung an einer derartigen Sperrkörperanordnung durch Personen, die auf eine entsprechende Durchgangssperre zugehen, hinsichtlich der Sichtbarkeit, Aussagekraft und Eindeutigkeit eingeschränkt. Demnach sind augenblicklich nicht einsatzbereite Durchgangssperren für den Nutzer weiterhin erst dann erkennbar, wenn der Nutzer sich nahezu unmittelbar an bzw. vor der Durchgangssperre befindet, so dass es weiterhin zu einem reduzierten Nutzerkomfort kommt. Zudem ist der Durchsatz durch die mindestens eine Durchgangssperre, insbesondere durch eine Reihe von nebeneinander angeordneten Durchgangssperren (auch als "gate array" bezeichnet), die beispielsweise in der beschriebenen Weise veränderlich in unterschiedlichen Durchgangrichtungen betrieben werden können, weiterhin nicht optimal.

Der Anmeldung liegt daher die Aufgabe zugrunde, eine Möglichkeit zu schaffen, welche den Nutzerkomfort insbesondere durch eine erhöhte Sichtbarkeit, Aussagekraft und Eindeutigkeit an einer Durchgangssperre verbessert und insbesondere eine Erhöhung des Durchsatzes an der Durchgangssperre bzw. an einer Reihe von mehreren Durchgangssperren ("gate array") ermöglicht.

Die Aufgabe wird gemäß einem ersten Aspekt der Anmeldung gelöst durch einen Sperrkörperverbund für eine Sperrkörperanordnung einer Durchgangssperre eines Zugangskontrollsystems. Der Sperrkörperverbund umfasst mindestens einen ersten im Wesentlichen optisch transparenten Sperrkörper mit einer ersten einen ersten Lichteinkoppelbereich aufweisenden Seitenfläche, einer zweiten mindestens einen ersten Lichtauskoppelbereich aufweisenden Seitenfläche und einer dritten (eine Sichtfläche des Sperrkörperverbunds bildenden und) der zweiten Seitenfläche gegenüberliegenden Seitenfläche. Der Sperrkörperverbund umfasst mindestens einen zweiten im Wesentlichen optisch transparenten Sperrkörper mit einer ersten einen zweiten Lichteinkoppelbereich aufweisenden Seitenfläche, einer zweiten mindestens einen zweiten Lichtauskoppelbereich aufweisenden Seitenfläche und einer dritten der zweiten Seitenfläche gegenüberliegenden Seitenfläche. Die dritte Seitenfläche des zweiten Sperrkörpers ist mit der zweiten Seitenfläche des ersten Sperrkörpers verbunden. Zwischen der dritten Seitenfläche des zweiten Sperrkörpers und der zweiten Seitenfläche des ersten Sperrkörpers ist eine zumindest teilweise im Wesentlichen optische transparente Trennschicht angeordnet. Durch den ersten Lichtauskoppelbereich und den zweiten Lichtauskoppelbereich ausgekoppeltes Licht ist (im Wesentlichen nur) an der dritten Seitenfläche des ersten Sperrkörpers sichtbar.

Indem im Gegensatz zum Stand der Technik anmeldungsgemäß ein Sperrkörperverbund mit zwei miteinander verbundenen Sperrkörpern bereitgestellt wird, bei dem sowohl das aus dem ersten Sperrkörper ausgekoppelte Licht als auch das aus dem zweiten Sperrkörper ausgekoppelte Licht im Wesentlichen nur an der dritten Seitenfläche des ersten Sperrkörpers sichtbar ist, wird eine Möglichkeit geschaffen, welche den Nutzerkomfort insbesondere durch eine erhöhte Sichtbarkeit, Aussagekraft und Eindeutigkeit an einer Durchgangssperre verbessert. Insbesondere wird hierdurch eine Erhöhung des Durchsatzes an der Durchgangssperre bzw. an einer Reihe von mehreren Durchgangssperren ("gate array") ermöglicht. Vorzugsweise ist der mindestens eine zweite Lichtauskoppelbereich derart an dem zweiten Sperrkörper angeordnet, dass das aus dem zweiten Sperrkörper ausgekoppelte Licht in den optisch transparenten ersten Sperrkörper eindringt, diesen durchdringt und dann an der dritten Seitenfläche des ersten Sperrkörpers austritt.

Ein anmeldungsgemäßer Sperrkörperverbund ist zumindest ein Teil einer Sperrkörperanordnung. Eine Sperrkörperanordnung dient insbesondere als (physisches) Sperrelement einer Durchgangssperre. Eine Durchgangssperre umfasst insbesondere mindestens eine Basis und mindestens eine bewegbar an der Basis angeordnete Sperrkörperanordnung, umfassend mindestens einen anmeldungsgemäßen Sperrkörperverbund.

Der im Wesentlichen optisch transparente Sperrkörperverbund ist insbesondere aus zumindest zwei miteinander verbundenen Sperrkörpern gebildet. Zwischen dem ersten Sperrkörper und dem zweiten Sperrkörper ist eine Trennschicht angeordnet. Die mindestens zwei Sperrkörper sind im Wesentlichen optisch transparent. Die Trennschicht ist zumindest teilweise im Wesentlichen transparent. Vorzugsweise kann ein Abschnitt bzw. Bereich der Trennschicht nicht transparent sein, und mindestens ein Abschnitt bzw. Bereich kann im Wesentlichen optisch transparent sein.

Im Wesentlichen optisch transparent meint vorliegend insbesondere, dass der überwiegende Teil der sichtbaren elektromagnetischen Strahlung von einem derartigen Sperrkörper bzw. einer derartigen Trennschicht durchgelassen wird. Unter einem im Wesentlichen optisch transparenten Sperrkörper bzw. einer im Wesentlichen optisch transparenten Trennschicht ist insbesondere ein Sperrkörper bzw. eine Trennschicht mit einem Lichttransmissionsgrad von zumindest größer als 70 % zu verstehen, vorzugsweise größer als 75 %.

Die optisch transparente Trennschicht kann beispielsweise zumindest teilweise aus Luft gebildet sein. Die anmeldungsgemäße Trennschicht kann alternativ oder zusätzlich eine Trennfolie sein, wie eine polymere Trennfolie, wie eine PVC (Polyvinylchlorid) Trennfolie. Gemäß einer Ausführungsform des Sperrkörperverbunds kann die Trennfolie eine (beidseitig) selbstklebende Trennfolie sein. Besonders bevorzugt kann die Trennschicht zumindest teilweise aus einer (nachfolgend noch näher beschriebenen) nicht transparenten Abdeckschicht und einer neben bzw. benachbart zu der nicht transparenten Abdeckschicht angeordneten (transparenten) Luftschicht gebildet sein.

Die Trennschicht kann insbesondere eingerichtet sein zum (mechanischen) Fügen bzw. Verbinden der zumindest zwei Sperrkörper miteinander und insbesondere zum gleichzeitigen optischen Trennen der genannten Sperrkörper voneinander.

Die Trennschicht kann vorzugsweise eine Dicke zwischen 0,05 mm und 10 mm aufweisen, besonders bevorzugt zwischen 0,15 mm und 0,5 mm.

Gemäß einer bevorzugten Ausführungsform kann ein (erster und/oder zweiter) Sperrkörper aus einem im Wesentlichen transparenten Kunststoff gebildet sein.

Vorzugsweise kann ein (erster und/oder zweiter) Sperrkörper aus Acrylglas und/oder Polymercarbonat gebildet sein.

Anmeldungsgemäß weisen der erste Sperrkörper und der zweite Sperrkörper jeweils mindestens eine erste Seitenfläche mit einem ersten Lichteinkoppelbereich bzw. einem zweiten Lichteinkoppelbereich auf. Ein jeweiliger Lichteinkoppelbereich ist insbesondere zumindest ein Teilbereich einer jeweiligen ersten Seitenfläche eines jeweiligen Sperrkörpers, an dem Licht durch eine Lichtquellenvorrichtung der Sperrkörperanordnung einkoppelbar bzw. einleitbar ist. Das eingekoppelte Licht kann sich in dem jeweiligen Sperrkörper ausbreiten. Anders ausgedrückt, ein Sperrkörper ist vorliegend insbesondere als Lichtleiter eingerichtet. Wie noch beschrieben wird, kann bei einer Ausführungsform einer Sperrkörperanordnung eine erste Lichtquellenvorrichtung mit dem mindestens einen ersten Lichteinkoppelbereich des ersten Sperrkörpers verbunden sein, und eine zweite Lichtquellenvorrichtung kann mit dem mindestens einen zweiten Lichteinkoppelbereich des zweiten Sperrkörpers verbunden sein.

Ferner umfasst ein jeweiliger Sperrkörper eine zweite Seitenfläche und eine dritte der zweiten Seitenfläche gegenüberliegende Seitenfläche. Die jeweilige zweite Seitenfläche weist mindestens einen ersten Lichtauskoppelbereich bzw. mindestens einen zweiten Lichtauskoppelbereich auf. Die dritte Seitenfläche des ersten Sperrkörpers bildet insbesondere eine Sichtfläche des Sperrkörperverbunds.

Insbesondere verfügt ein anmeldungsgemäßer Sperrkörperverbund über genau eine Sichtfläche, die durch die dritte Seitenfläche des ersten Sperrkörpers gebildet wird, welche gegenüber der zweiten Seitenfläche des ersten Sperrkörpers und gegenüber zumindest der zweiten Seitenfläche des zweiten Sperrkörpers liegt.

Ein Lichtauskoppelbereich bzw. ein Diffusionsbereich zeichnet sich insbesondere dadurch aus, dass das in dem Lichtauskoppelbereich auftreffende Licht derart umgelenkt wird, dass es aus dem jeweiligen Sperrkörper durch die jeweilige dritte Seitenfläche ausgekoppelt wird, also dass das sich in dem Sperrkörper ausbreitende Licht an der Lichtauskoppelfläche derart umgelenkt wird, dass es durch die jeweilige dritte Seitenfläche transmittiert.

Unter einem Lichtauskoppelbereich ist vorliegend insbesondere ein Oberflächenbereich an einer jeweiligen äußeren zweiten Seitenfläche eines jeweiligen Sperrkörpers zu verstehen, der eine Absorption des Lichts in diesem Oberflächenbereich des Sperrkörpers ermöglicht. An diesem mindesten einen Oberflächenbereich kann das sich in dem Sperrkörper ausbreitende Licht absorbiert und insbesondere diffus in die Umgebung abgestrahlt werden, insbesondere in Richtung der jeweiligen dritten Seitenfläche und damit in Richtung der Sichtfläche des Sperrkörperverbunds.

Die (optische) Trennschicht kann, gemäß einer bevorzugten Ausführungsform des anmeldungsgemäßen Sperrkörperverbunds, sich dadurch auszeichnen, dass der Trennschichtbrechungsindex der Trennschicht (zumindest teilweise) zumindest kleiner sein kann als ein erster Sperrkörperbrechungsindex des ersten Sperrkörpers und ein zweiter Sperrkörperbrechungsindex des zweiten Sperrkörpers. Hierdurch kann erreicht werden, dass das jeweils eingekoppelte Licht sich in dem jeweiligen Sperrkörper ausbreitet und insbesondere nicht unkontrolliert in den jeweils anderen Sperrkörper hinein diffundieren kann, sondern nur mittels eines angeordneten Lichtauskoppelbereichs.

Gemäß einer weiteren Ausführungsform des anmeldungsgemäßen Sperrkörperverbunds kann der Trennschichtbrechungsindex (zumindest teilweise) zumindest kleiner als 1,5 sein. Bevorzugt kann der Trennschichtbrechungsindex zwischen 1 und 1,49 liegen. Insbesondere zusätzlich kann der mindestens eine (erste oder zweite) Sperrkörperbrechungsindex größer oder gleich 1,5 sein. Bevorzugt kann der mindestens eine (erste oder zweite) Sperrkörperbrechungsindex zwischen 1,5 und 1,9 liegen. Die genannten Werte beziehen sich insbesondere auf Normalbedingungen bei einer Wellenlänge von 589 nm (gelb-orange) der Natrium-D-Linie.

Grundsätzlich gibt es verschiedene Möglichkeiten, einen Lichtauskoppelbereich an einer Außenseite eines Sperrkörpers zu bilden. Gemäß einer bevorzugten Ausführungsform des anmeldungsgemäßen Sperrkörperverbunds kann der erste Lichtauskoppelbereich gebildet sein durch einen aufgerauten Oberflächenbereich und durch eine über dem aufgerauten Oberflächenbereich angeordnete optisch intransparente Abdeckschicht. Alternativ oder zusätzlich kann der zweite Lichtauskoppelbereich gebildet sein durch einen aufgerauten Oberflächenbereich und durch eine über dem aufgerauten Oberflächenbereich angeordnete optisch intransparente Abdeckschicht. Insbesondere kann die Oberfläche eines Lichtauskoppelbereichs rauer sein als die Oberfläche der Umgebungsfläche des Lichtauskoppelbereichs. In einfacher Weise kann eine Absorption des Lichts in einem bestimmten Oberflächenbereich des Sperrkörpers durch eine Aufrauhung des entsprechenden Oberflächenbereichs erzeugt werden.

Ein erster Oberflächenbereich ist insbesondere dann rauer als ein anderer (benachbarter) Oberflächenbereich einer jeweiligen zweiten Seitenfläche, wenn der Mittenrauwert Ra des ersten Oberflächenbereichs größer ist als der Mittenrauwert Ra des anderen (benachbarten) Oberflächenbereichs. Vorzugsweise kann der Mittenrauwert $Ra_{LA}$ der Oberfläche des mindestens einen Lichtauskoppelbereichs größer sein als der Mittenrauwert Rau der Oberfläche der Umgebung des Lichtauskoppelbereichs. Eine Rauheitsmessung kann beispielsweise gemäß der Norm DIN EN ISO 25178 erfolgen.

Vorzugsweise kann eine Herstellung eines Lichtauskoppelbereichs an einem Sperrkörper durch Sandstrahlen erfolgen. Insbesondere kann nur der Oberflächenbereich, der als Lichtauskoppelbereich dienen soll, sandgestrahlt werden. In einfacher Weise kann ein Lichtauskoppelbereich (insbesondere in einer definierten Symbolform oder Teilsymbolform) bereitgestellt werden. Es versteht sich, dass bei Varianten der Anmeldung die Aufrauhung auch durch ein anderes Verfahren hergestellt werden kann.

Um insbesondere sicherzustellen, dass das auf den aufgerauten Oberflächenbereich treffende Licht (stets) in Richtung der (jeweils) gegenüberliegenden dritten Seitenfläche abgelenkt wird, kann über dem (jeweiligen) aufgerauten Oberflächenbereich eine optisch intransparente Abdeckschicht angeordnet sein. Die Abdeckschicht ist insbesondere von außen angebracht und deckt im Wesentlichen (nur) den aufgerauten Oberflächenbereich ab (ggf. mit einem Toleranzbereich). Die Abdeckschicht kann vorzugsweise eine Klebefolie sein. Bevorzugt kann die Abdeckschicht weiß sein.

Gemäß einer weiteren Ausführungsform des anmeldungsgemäßen Sperrkörperverbunds kann die mindestens eine zumindest teilweise optisch transparente Trennschicht gebildet sein durch die mindestens eine zwischen der zweiten Seitenfläche des ersten Sperrkörpers und der dritten Seitenfläche des zweiten Sperrkörpers angeordnete Abdeckschicht und durch eine sich benachbart zu der genannten Abdeckschicht befindliche Luftschicht. Wie beschrieben wurde, kann die Abdeckschicht von außen an einem Sperrkörper angebracht sein. Die angebrachte Abdeckschicht führt in einem verbundenen Zustand der zumindest zwei Sperrkörper zu einem Abstand (entsprechend der Dicke der Abdeckschicht) zwischen dem ersten Sperrkörper und dem zweiten Sperrkörper. Es ist erkannt worden, dass in den Bereichen, in denen keine Abdeckschicht vorhanden ist, auf eine weitere Folie oder dergleichen verzichtet werden kann und die in diesen Bereichen vorhandene Luftschicht als Teil der Trennschicht verwendet werden kann. Dies kann die Herstellung eines Sperrkörperverbunds erleichtern. Beispielsweise kann eine Abdeckschicht beidseitig klebend ausgebildet sein. Dann kann eine derartige Abdeckschicht zusätzlich zum Herstellen der (dauerhaften) Verbindung zwischen den Sperrkörpern verwendet werden. Es versteht sich, dass alternativ oder zusätzlich andere Mittel zum Herstellen der (dauerhaften) Verbindung genutzt werden können.

Gemäß einer weiteren Ausführungsform des anmeldungsgemäßen Sperrkörperverbunds kann der erste Lichtauskoppelbereich versetzt zu dem zweiten Lichtauskoppelbereich angeordnet sein, derart, dass beim Einkoppeln von Licht in den ersten Lichteinkoppelbereich das durch den ersten Lichtauskoppelbereich ausgekoppelte Licht (nur) an der dritten Seitenfläche des ersten Sperrkörpers sichtbar ist und dass beim Einkoppeln von Licht in den zweiten Lichteinkoppelbereich das durch den zweiten Lichtauskoppelbereich ausgekoppelte Licht (nur und zusätzlich zu dem durch den ersten Lichtauskoppelbereich ausgekoppelte Licht) an der dritten Seitenfläche des ersten Sperrkörpers sichtbar ist. Versetzt meint insbesondere, dass, aus der Sicht der dritten Seitenfläche des ersten Sperrkörpers, der mindestens eine erste Lichtauskoppelbereich nicht mit dem mindestens einen zweiten Lichtauskoppelbereich überlappt. Mit anderen Worten, sämtliches durch den zweiten Lichtauskoppelbereich ausgekoppeltes Licht ist zusätzlich zu dem Licht sichtbar, das durch den ersten Lichtauskoppelbereich ausgekoppelt wird. In einfacher Weise kann durch eine versetzte Anordnung erreicht werden, dass sowohl das durch den ersten Lichtauskoppelbereich ausgekoppelte Licht als auch das durch den zweiten Lichtauskoppelbereich ausgekoppelte Licht an der der dritten Seitenfläche des ersten Sperrkörpers (vollständig) sichtbar ist.

Gemäß einer bevorzugten Ausführungsform des anmeldungsgemäßen Sperrkörperverbunds kann der erste Lichtauskoppelbereich eine erste Symbolform bilden bzw. sein. Der zweite Lichtauskoppelbereich kann eine Teilsymbolform oder eine zweite Symbolform bilden bzw. sein. Der erste Lichtauskoppelbereich und der zweite Lichtauskoppelbereich können zusammen eine aus der ersten Symbolform und der Teilsymbolform oder der zweiten Symbolform zusammengesetzte Symbolform bilden. Wie beschrieben wurde, kann zum Bilden einer Lichtauskoppelfläche in Form eines Symbols die Oberfläche der zweiten Seitenfläche entsprechend bearbeitet sein, beispielsweise aufgeraut sein. Ein Symbol bzw. eine Symbolform ist beispielsweise ein Kreis, Rechteck, Pfeil, Buchstabe, Zahl etc. bzw. eine entsprechende Form. Ein Teilsymbol meint in entsprechender Weise ein Teil eines vorgenannten Symbols.

Vorzugsweise kann der erste Lichtauskoppelbereich ein erstes Symbol sein. Wenn Licht nur in den ersten Sperrkörper eingekoppelt wird, leuchtet auf der dritten Seitenfläche des ersten Sperrkörpers nur das erste Symbol. Wenn Licht nur in den zweiten Sperrkörper eingekoppelt wird, leuchtet auf der dritten Seitenfläche des ersten Sperrkörpers nur das zweite Symbol oder das Teilsymbol. Wenn Licht in den ersten Sperrkörper und in den zweiten Sperrkörper eingekoppelt wird, leuchtet auf der dritten Seitenfläche des ersten Sperrkörpers das zusammengesetzte Symbol. Insbesondere kann hierdurch die Sichtbarkeit, Aussagekraft und Eindeutigkeit an einer Durchgangssperre noch weiter verbessert werden.

Bevorzugt werden die zumindest zwei Sperrkörper so gestapelt, dass der (erste) Sperrkörper, der in der Symbolkombinatorik sehr häufig benötigt wird oder sogar allein ein Symbol umfasst, bei Betrachtung der Sichtfläche des Sperrkörperverbunds vor dem mindestens einen Sperrkörper liegt, welcher nur mit dem mindestens einen weiteren (zweiten) Sperrkörper gemeinsam ein zusammengesetztes Symbol formt. Dadurch wird insbesondere verhindert, dass Licht aus einem häufig beleuchteten Sperrkörper unabsichtlich den mindestens einen weiteren Sperrkörper mit beleuchtet. Der umgekehrte Fall hat sich in der Praxis insbesondere als unkritisch gezeigt, da alle Sperrkörper beleuchtet werden.

Grundsätzlich kann ein Sperrkörper eine beliebige Form aufweisen. Gemäß einer bevorzugten Ausführungsform des anmeldungsgemäßen Sperrkörperverbunds kann ein Sperrkörper ein plattenförmiger bzw. scheibenförmiger Sperrkörper sein. Ein plattenförmiger Sperrkörper bzw. eine Sperrkörperplatte weist zwei Flachseiten und mindestens eine Schmalseite auf. Beispielsweise sind bei einer im Wesentlichen rechteckigen Sperrkörperplatte vier Schmalseiten vorhanden (also insgesamt sechs Seitenflächen), während bei einer kreisrunden oder ovalen Sperrkörperplatte eine umlaufende Schmalseite vorhanden ist.

Bei einer bevorzugten Ausführungsform kann der erste Sperrkörper eine im Wesentlichen identische Form wie der zweite Sperrkörper aufweisen. Insbesondere können die Abmessungen (z.B. Dicke (z.B. 1 mm - 5 mm, bevorzugt ca. 1,5 mm), Breite, Länge, Durchmesser, Umrissform etc.) bei den zumindest zwei Sperrkörpern, die den Sperrkörperverbund bilden, im Wesentlichen gleich sein. Die Größe einer Flachseite kann vorzugsweise im Wesentlichen zu der Größe der zusammengesetzten Symbolform korrespondieren. Insbesondere um ungewollte Lichtverluste zu reduzieren, können Länge und Breite eines Sperrkörpers bzw. des Sperrkörperverbunds so gewählt sein, dass sie nur etwas größer sind als das zusammengesetzte Symbol (z.B. 200 mm bis 250 mm x 200 mm bis 250 mm).

Gemäß einer weiteren Ausführungsform des anmeldungsgemäßen Sperrkörperverbunds kann an mindestens einer vierten Seitenfläche (insbesondere an sämtlichen weiteren Seitenflächen oder Teilseitenflächen oder Schmalseiten) des ersten Sperrkörpers eine Reflexionsschicht angeordnet sein. Alternativ oder zusätzlich kann an mindestens einer vierten Seitenfläche (insbesondere an sämtlichen weiteren Seitenflächen oder Teilseitenflächen oder Schmalseiten) des zweiten Sperrkörpers eine Reflexionsschicht angeordnet sein. Durch den mindestens einen Lichtauskoppelbereich entsteht ein gewollter Austritt des eingekoppelten Lichts bzw. der eingekoppelten Lichtstrahlen. An anderen Grenzflächen eines Sperrkörpers bzw. Sperrkörperverbunds können jedoch Lichtverluste durch ungewollten Lichtaustritt entstehen. Dies hat wiederum zur Folge, dass die Intensität des ausgekoppelten Lichts mit zunehmender Entfernung zu dem Lichteinkoppelbereich abnimmt. Um die ungewollten Lichtaustritte weiter zu reduzieren, kann an den weiteren Grenzflächen, insbesondere einer vierten Seitenfläche (vorzugsweise an allen weiteren Schmalseiten) eines Sperrkörpers bzw. des Sperrkörperverbunds eine Reflexionsschicht (z.B. in Form einer reflexiven Folie) angebracht sein. Dadurch erfolgt insbesondere eine gleichmäßigere Lichtintensität an der Sichtfläche des ersten Sperrkörperverbunds. Die Sichtbarkeit kann dadurch noch weiter verbessert werden.

Gemäß einer weiteren Ausführungsform des anmeldungsgemäßen Sperrkörperverbunds kann der Sperrkörperverbund mindestens einen dritten im Wesentlichen optisch transparenten Sperrkörper umfassen mit einer ersten einen dritten Lichteinkoppelbereich aufweisenden Seitenfläche, einer zweiten mindestens einen dritten Lichtauskoppelbereich aufweisenden Seitenfläche und einer dritten der zweiten Seitenfläche gegenüberliegenden Seitenfläche. Die dritte Seitenfläche des dritten Sperrkörpers kann mit der zweiten Seitenfläche des zweiten Sperrkörpers verbunden sein. Zwischen der dritten Seitenfläche des dritten Sperrkörpers und der zweiten Seitenfläche des zweiten Sperrkörpers kann eine zumindest teilweise im Wesentlichen optische transparente Trennschicht angeordnet sein.

Durch den ersten Lichtauskoppelbereich, den zweiten Lichtauskoppelbereich und den dritten Lichtauskoppelbereich ausgekoppeltes Licht kann (im Wesentlichen nur) an der dritten Seitenfläche des ersten Sperrkörpers sichtbar sein. Insbesondere kann ein Sperrkörperverbund aus zwei oder mehr gestapelten Sperrkörpern gebildet sein. Die vorherigen Ausführungen zu dem ersten Sperrkörper und zweiten Sperrkörper können insbesondere auf den dritten (und jeden weiteren) Sperrkörper übertragen werden. Insbesondere ist der dritte Lichtauskoppelbereich versetzt zu dem zweiten Lichtauskoppelbereich und dem ersten Lichtauskoppelbereich angeordnet, derart, dass bei einem Einkoppeln von Licht in den dritten Lichteinkoppelbereich das durch den dritten Lichtauskoppelbereich ausgekoppelte Licht (nur) an der dritten Seitenfläche des ersten Sperrkörpers sichtbar ist. Wenn Licht in den ersten Sperrkörper, in den zweiten Sperrkörper und in den dritten Sperrkörper eingekoppelt wird, leuchtet auf der dritten Seitenfläche des ersten Sperrkörpers ein aus dem ersten Symbol, einem zweiten Symbol oder Teilsymbol und einem dritten Symbol (gebildet durch den dritten Lichtauskoppelbereich) oder Teilsymbol (gebildet durch den dritten Lichtauskoppelbereich) zusammengesetztes Symbol. Insbesondere kann hierdurch die Sichtbarkeit, Aussagekraft und Eindeutigkeit an einer Durchgangssperre noch weiter verbessert werden.

Darüber hinaus ist erkannt worden, dass insbesondere das Einkoppeln von Licht in Sperrkörper mit einer geringen Dicke (z.B. 1 mm - 3 mm) und einem geringen Abstand (definiert durch die Trennschicht) zwischen dem ersten und dem zweiten Sperrkörper Probleme mit sich bringen kann. Dies liegt insbesondere daran, dass die am Markt erhältlichen Lichtquellen insbesondere in Form von Dioden größere Dimensionen haben (z.B. eine Dicke zwischen 3,5 mm und 5 mm) als die Dicke der Sperrkörper und dass es daher dazu kommen kann, dass Licht zumindest teilweise gleichzeitig in den ersten Sperrkörper und in den zweiten Sperrkörper eingekoppelt wird, obwohl beispielsweise nur Licht in den ersten Sperrkörper eingekoppelt werden soll. Gemäß einer Ausführungsform kann die Dicke des ersten Sperrkörpers und/oder des zweiten Sperrkörpers zumindest dicker als die Dicke einer Lichtquelle bzw. einer Lichtquellenanordnung (gebildet aus mehreren Lichtquellen) sein. Alternativ oder zusätzlich kann der Abstand zwischen dem ersten Sperrkörper und dem zweiten Sperrkörper und damit die Dicke der Trennschicht vergrößert werden.

Gemäß einer besonders bevorzugten Ausführungsform des anmeldungsgemäßen Sperrkörperverbunds kann der erste Lichteinkoppelbereich der ersten Seitenfläche des ersten Sperrkörpers gebildet sein durch eine erste Mehrzahl von ersten aus der ersten Seitenfläche des ersten Sperrkörpers hervorstehenden Zapfen. Der zweite Lichteinkoppelbereich der ersten Seitenfläche des zweiten Sperrkörpers kann gebildet sein durch eine zweite Mehrzahl von zweiten aus der ersten Seitenfläche des zweiten Sperrkörpers hervorstehenden Zapfen. Insbesondere kann bei dieser Ausführungsform ein Sperrkörper mit einer Dicke genutzt werden, die geringer ist als die Dicke der Lichtquellen. Zudem kann der Abstand zwischen den Sperrkörpern bzw. die Dicke (z.B. 0,15 mm und 0,5 mm) der Trennschicht gering sein. Insbesondere kann die Anzahl und/oder die Anordnung der Zapfen eines Lichteinkoppelbereichs zu der Anzahl und/oder Anordnung der Lichtquellen einer Lichtquellenvorrichtung korrespondieren bzw. darauf abgestimmt sein.

Vorzugsweise kann die Mehrzahl an Zapfen in einer Reihe an einer ersten Seitenfläche angeordnet sein. Insbesondere kann eine kammartige Anordnung vorgesehen sein. Insbesondere kann jeder erste und zweite Zapfen die gleiche Form und Größe aufweisen. Beispielsweise kann nach jedem Zapfen eine (flächenmäßig) gleichgroße Ausnehmung vorgesehen sein. Die Länge eines Zapfens in Längsrichtung eines Kamms kann vorzugsweise ein Vielfaches (insbesondere zwischen 1 und 3) einer Länge (in Längsrichtung des Kamms) einer in einer Lichtquellenanordnung angeordneten Lichtquelle sein. Die Länge (in Längsrichtung des Kamms) einer zwischen zwei Zapfen liegenden Ausnehmung kann (stets) der Länge eines Zapfens entsprechen.

Ein jeweiliger Zapfen kann insbesondere eine Lichteinkoppelfläche aufweisen, in die das Licht einer zugehörigen Lichtquelle eingekoppelt werden kann. Beispielsweise kann die Lichteinkoppelfläche plan sein und einen rechteckförmigen Querschnitt aufweisen. Die Grundfläche der Ausnehmung kann insbesondere den gleichen Querschnitt (mit dergleichen Größe) wie die Lichteinkoppelfläche aufweisen. Es versteht sich, dass bei Varianten der Anmeldung die Lichteinkoppelfläche auch eine andere Querschnittsform haben kann, beispielsweise eine kreisrunde oder ovale Querschnittsform.

Gemäß einer bevorzugten Ausführungsform des anmeldungsgemäßen Sperrkörperverbunds können in einem verbundenen Zustand des ersten Sperrkörpers und des zweiten Sperrkörpers die ersten Zapfen versetzt zu den zweiten Zapfen angeordnet sein. Dies meint insbesondere, dass unmittelbar benachbart zu einem ersten Zapfen kein zweiter Zapfen angeordnet ist, sondern eine zwischen zwei benachbarten Zapfen angeordnete Ausnehmung. Bei einer kammartigen Anordnung der ersten Zapfen und bei einer kammartigen Anordnung der zweiten Zapfen kann der erste Kamm mit den ersten Zapfen bzw. Zinken derart versetzt zu dem zweiten Kamm mit den zweiten Zapfen bzw. Zinken angeordnet sein, dass ein jeweiliger erster Zapfen stets benachbart zu einer zweiten Ausnehmung des zweiten Kamms und ein zweiter Zapfen stets benachbart zu einer ersten Ausnehmung des ersten Kamms angeordnet ist. Hierdurch können die Lichtquellen einer Lichtquellenanordnung in entsprechender Weise versetzt zueinander angeordnet sein, so dass der benötigte Abstand zwischen den Lichtquellenquellenanordnungen minimiert werden kann. In einfacher und sicherer Weise kann insbesondere bei Sperrkörpern mit einer geringen Dicke (z.B. zwischen 1mm und 3 mm) und einer dünnen Trennschicht (z.B. zwischen 0,15 mm und 0,5 mm) sichergestellt werden, dass durch die mindestens eine erste Lichtquellenanordnung nur Licht in den ersten Sperrkörper und durch die mindestens eine zweite Lichtquellenanordnung nur Licht in den zweiten Sperrköper eingekoppelt werden kann.

Gemäß einer weiteren (insbesondere im Vergleich zu der vorherigen Ausführungsform alternativen) Ausführungsform des anmeldungsgemäßen Sperrkörperverbunds kann (in einem verbundenen Zustand des ersten Sperrkörpers und des zweiten Sperrkörpers) ein erster Endbereich mit der ersten Seitenfläche des ersten Sperrkörpers gegenüber einem zweiten Endbereich mit der zweiten Seitenfläche des zweiten Sperrkörpers derart verformt sein, dass der Abstand zwischen dem ersten Endbereich und dem zweiten Endbereich größer ist als der Abstand zwischen der zweiten Seitenfläche des ersten Sperrkörpers und der dritten Seitenfläche des zweiten Sperrkörpers (in einem verbundenen Bereich bzw. in einem Bereich, der nicht der Endbereich ist). Der Abstand im Endbereich kann beispielsweise zwischen 3 mm und 10 mm liegen. Wie bereits beschrieben wurde, kann der Abstand im verbundenen Bereich bzw. die Dicke der Trennschicht zwischen z.B. 0,15 mm und 0,5 mm liegen. Indem der Abstand zwischen dem ersten Endbereich und dem zweiten Endbereich durch eine Verformung (beispielsweise Verbiegung) vergrößert ist (verglichen zu den verbundenen Bereichen, insbesondere umfassend den mindestens einen Lichtauskoppelbereich), kann bei Sperrkörpern mit einer geringen Dicke (z.B. zwischen 1mm und 3 mm) sichergestellt werden, dass durch die mindestens eine erste Lichtquellenanordnung nur Licht in den ersten Sperrkörper und durch die mindestens eine zweite Lichtquellenanordnung nur Licht in den zweiten Sperrköper eingekoppelt werden kann.

Ein weiterer Aspekt der Anmeldung ist ein Sperrkörperverbundset. Das Sperrkörperverbundset umfasst einen ersten zuvor beschriebenen Sperrkörperverbund. Das Sperrkörperverbundset umfasst einen zweiten zuvor beschriebenen Sperrkörperverbund. Eine zweite Seitenfläche des ersten Sperrkörperverbunds, die eine Rückseite des ersten Sperrkörperverbunds bildet, ist mit einer zweiten Seitenfläche des zweiten Sperrkörperverbunds, die eine Rückseite des zweite Sperrkörperverbunds bildet, verbunden. Zwischen der zweiten Seitenfläche des ersten Sperrkörperverbunds und der zweiten Seitenfläche des zweiten Sperrkörperverbunds ist eine zumindest teilweise im Wesentlichen optisch transparente Trennschicht angeordnet.

Ein anmeldungsgemäßes Sperrkörperverbundset ermöglicht die beidseitige Darstellung von Informationen. Insbesondere kann auf bzw. an der Vorderseite des Sperrkörperverbundsets eine andere Information (z.B. andere Farbe, anderes Symbol etc.) angezeigt werden als auf bzw. an der Rückseite des Sperrkörperverbundset. Die Vorderseite des Sperrkörperverbundsets kann durch die dritte Seitenfläche des ersten Sperrkörpers des ersten Sperrkörperverbunds gebildet sein, und die Rückseite des Sperrkörperverbundsets kann durch die dritte Seitenfläche des zweiten Sperrkörpers des zweiten Sperrkörperverbunds gebildet sein.

Die zweite Seitenfläche eines Sperrkörperverbunds kann die zweite Seitenfläche eines zweiten Sperrkörpers sein. Wenn ein Sperrkörperverbund drei Sperrkörper umfasst, kann die zweite Seitenfläche des Sperrkörperverbunds die zweite Seitenfläche des dritten Sperrkörpers sein. Entsprechendes gilt für einen Sperrkörperverbund mit vier oder mehr gestapelten Sperrkörpern.

Die Trennschicht kann entsprechend der vorbeschriebenen Trennschicht gebildet sein. Beispielsweise kann die Trennschicht zwischen den genannten zweiten Seitenflächen durch mindestens eine Abdeckschicht und eine Luftschicht gebildet sein.

Ein weiterer Aspekt der Anmeldung ist eine Sperrkörperanordnung einer Durchgangssperre eines Zugangskontrollsystems. Die Sperrkörperanordnung umfasst mindestens einen zuvor beschriebenen Sperrkörperverbund und/oder ein zuvor beschriebenes Sperrkörperverbundset. Die Sperrkörperanordnung umfasst mindestens eine Lichtquellenvorrichtung mit mindestens einer ersten Lichtquellenanordnung, eingerichtet zum Einkoppeln von Licht in den mindestens einen ersten Lichteinkoppelbereich, und mit mindestens einer zweiten Lichtquellenanordnung, eingerichtet zum Einkoppeln von Licht in den mindestens einen zweiten Lichteinkoppelbereich.

Insbesondere kann die Lichtquellenvorrichtung derart angeordnet sein, dass die mindestens eine erste Lichtquellenanordnung mit dem ersten Lichteinkoppelbereich eines ersten Sperrkörpers (optisch) verbunden ist und dass die mindestens eine zweite Lichtquellenanordnung mit dem zweiten Lichteinkoppelbereich eines zweiten Sperrkörpers (optisch) verbunden ist. Es versteht sich, dass bei mehr als zwei Sperrkörpern eine entsprechende Anzahl weiterer Lichtquellenanordnung vorgesehen sein kann.

Die mindestens eine Lichtquellenvorrichtung der Sperrkörperanordnung umfasst insbesondere mindestens eine Lichtquellenanordnung, die insbesondere ihrerseits eine Mehrzahl von identischen oder unterschiedlichen Lichtquellen umfasst. Eine Lichtquelle kann eingerichtet sein zum Generieren von Licht bzw. sichtbarer elektromagnetischer Strahlung. Eine Lichtquelle kann insbesondere eine einfarbige Leuchtdiode (LED) sein oder eine mehrfarbige Leuchtdiode (LED). Eine mehrfarbige Leuchtdiode kann technisch durch eine Gruppe von mehreren einzeln ansteuerbaren einfarbigen Leuchtdioden (LED) gebildet sein, die so nahe beieinander angeordnet sind, dass in der Außenwirkung (nur) eine Lichtquelle wahrnehmbar ist, die mit mehreren Farben leuchten kann. Typischerweise ist eine mehrfarbige Leuchtdiode gebildet aus drei einfarbigen Leuchtdioden mit den Farben rot, grün und blau. Es versteht sich, dass bei anderen Varianten der Anmeldung auch andere Lichtquellen (z.B. Gasentladungslampe, Laser etc.) eingesetzt werden können.

Eine Lichtquellenanordnung der Sperrkörperanordnung ist also insbesondere dazu eingerichtet, Licht von wenigstens einer Farbe in einen Lichteinkoppelbereich eines zugehörigen Sperrkörpers einzukoppeln, wobei die Farbemission der Lichtquellenanordnung ansteuerbar ist, wie weiter unten erläutert werden wird.

Die mindestens eine Lichtquellenvorrichtung ist insbesondere an einer Außenseite des Sperrkörperverbunds bzw. des ersten Sperrkörpers und des zweiten Sperrkörpers derart angeordnet, dass durch eine erste Lichtquellenanordnung der Lichtquellenvorrichtung generiertes Licht an dem ersten Lichteinkoppelbereich und insbesondere zusätzlich durch eine zweite Lichtquellenanordnung der Lichtquellenvorrichtung generiertes Licht an dem zweiten Lichteinkoppelbereich in den jeweiligen Sperrkörper eingekoppelt wird.

Gemäß einer weiteren Ausführungsform der anmeldungsgemäßen Sperrkörperanordnung kann die Lichtquellenvorrichtung eine optisch nicht transparente Kapselung umfassen. Eine optisch nicht transparente Kapselung meint insbesondere, dass die Lichtquellen der Lichtquellenvorrichtung von einem lichtdichten Gehäuse umgeben sind. Die Kapselung ist vorzugsweise derart angeordnet, dass das von der Lichtquellenvorrichtung, insbesondere von den darin integrierten Lichtquellen, generierte Licht nur in den ersten Lichteinkoppelbereich und/oder den zweiten Lichteinkoppelbereich eingekoppelt wird. Mit anderen Worten, die Lichtquellen sind vorzugsweise vollständig von der Kapselung und dem Sperrkörperverbund (bzw. der jeweiligen ersten Seitenflächen der Sperrkörper) umgeben.

Die Kapselung kann insbesondere aus Metall gebildet sein. Beispielsweise kann die Kapselung aus einem Metallblech geformt sein. Es versteht sich, dass bei anderen Varianten der Anmeldung auch andere lichtdichte Materialien verwendet werden können.

Vorzugsweise kann die Kapselung bzw. das Gehäuse eine U-Querschnittsform aufweisen. An der offenen Seite der U-Querschnittsform kann die erste Seitenfläche mit dem ersten Lichteinkoppelbereich des ersten Sperrkörpers und/oder die erste Seitenfläche mit dem zweiten Lichteinkoppelbereich des zweiten Sperrkörpers angeordnet sein. Mit anderen Worten, durch die mindestens zwei ersten Seitenflächen des Sperrkörperverbunds kann die offene Seite der U-Querschnittsform (vollständig) verschlossen sein.

Durch die bevorzugt vollständige Einkapselung der Mehrzahl von Lichtquellen der Lichtquellenvorrichtung kann verhindert werden, dass Fremdlicht in einen Lichteinkoppelbereich eingekoppelt werden kann.

Gemäß einer weiteren Ausführungsform der anmeldungsgemäßen Sperrkörperanordnung kann die Lichtquellenvorrichtung mindestens eine erste Lichtquellenanordnung umfassen. Die mindestens eine erste Lichtquellenanordnung kann eingerichtet sein zum Generieren von Licht in einem ersten Lichtwellenlängenbereich. Die Lichtquellenvorrichtung kann mindestens eine zweite Lichtquellenanordnung umfassen. Die mindestens eine zweite Lichtquellenanordnung kann eingerichtet sein zum Generieren von Licht in einem zweiten sich Lichtwellenlängenbereich unterscheidenden Lichtwellenlängenbereich. Insbesondere können die erste und die zweite Lichtquellenanordnungen ansteuerbar sein hinsichtlich der generierten Lichtfarben, so dass die erste und die zweite Lichtquellenanordnung identische, unterschiedliche oder zeitliche wechselnde Farben generieren können.

Gemäß einer besonders bevorzugten Ausführungsform einer anmeldungsgemäßen Sperrkörperanordnung kann die mindestens eine erste Lichtquellenanordnung derart in der Lichtquellenvorrichtung angeordnet sein, dass das generierte Licht nur in den mindestens einen ersten Lichteinkoppelbereich eingekoppelt wird. Anders ausgedrückt, die mindestens eine erste Lichtquellenanordnung koppelt das von ihr generierte Licht nur in den ersten Sperrkörper ein. Die mindestens eine zweite Lichtquellenanordnung kann derart in der Lichtquellenvorrichtung angeordnet sein, dass das generierte Licht nur in den mindestens einen zweiten Lichteinkoppelbereich eingekoppelt wird. Anders ausgedrückt, die mindestens eine zweite Lichtquellenanordnung koppelt das von ihr generierte Licht nur in den zweite Sperrkörper ein. Entsprechend dem obigen Beispiel kann beispielsweise rotes Licht nur in den ersten Sperrkörper und grünes Licht nur in den zweiten Sperrkörper eingekoppelt werden. Bei Varianten der Anmeldung kann alternativ oder zusätzlich Licht mit der gleichen Farbe in den ersten Sperrkörper und den zweiten Sperrkörper eingekoppelt werden. In entsprechender Weise kann für einen dritten Sperrkörper mindestens eine dritte Lichtquellenanordnung vorgesehen sein.

Wie bereits beschrieben wurde, kann die Lichtquellenvorrichtung vorzugsweise eine Kapselung umfassen. Vorzugsweise kann zwischen der mindestens einen ersten Lichtquellenanordnung und der mindestens einen zweiten Lichtquellenanordnung eine optisch nicht transparente Quellentrennschicht angeordnet sein. Die Quellentrennschicht kann insbesondere Teil der Kapselung sein. Durch die Quellentrennschicht kann die Kapselung in eine erste Teilkapselung und eine zweite Teilkapselung unterteilt sein. Vorzugsweise können die mindestens eine erste Lichtquellenanordnung (nur) in der ersten Teilkapselung und die mindestens eine zweite Lichtquellenanordnung (nur) in der zweiten Kapselung angeordnet sein.

Die Quellentrennschicht (vorzugsweise auch aus Metall gebildet, wie einem Metallblech) kann insbesondere derart angeordnet sein, dass in der Lichtquellenvorrichtung kein Licht von der ersten (bzw. der zweiten) Lichtquellenanordnung aus der ersten Teilkapselung (bzw. der zweiten Teilkapselung) in die die zweite Teilkapselung (bzw. die erste Teilkapselung) gelangen kann.

Ferner bewirkt eine Teilkapselung der ersten bzw. zweiten Lichtquellenanordnung, dass Streulicht durch Grenzwinkelüberschreitung in den jeweils anderen Sperrkörper verhindert werden kann. Insbesondere kann durch eine jeweilige Teilkapselung eine Lichtausbreitung vorwiegend orthogonal zur Oberfläche des jeweiligen Lichteinkoppelbereichs bereitgestellt werden.

Optional kann die mindestens eine Lichtquellenvorrichtung mindestens ein der mindestens einen Lichtquellenanordnung nachgeschaltetes Bündelungsmodul bzw. Fokussierungsmodul umfassen. Beispielsweise kann als Bündelungsmodul eine Linse der mindestens einen Lichtquellenanordnung nachgeschaltet sein. Hierdurch kann das generierte Licht noch fokussierter in einen Sperrkörper eingekoppelt werden. Hierdurch kann (wiederum) erreicht werden, dass das in einen Sperrkörper eingekoppelte Licht an den jeweiligen Grenzflächen des Sperrkörpers reflektiert wird. Insbesondere kann das Licht hierdurch derart fokussiert eingekoppelt werden, dass das Licht an den Grenzflächen des Sperrkörpers reflektiert wird und nicht in ein angrenzendes Medium (wie die Umgebung, insbesondere Luft, oder den weiteren Sperrkörper) diffundieren kann. Insbesondere kann nur Licht, das auf eine Lichtauskoppelfläche trifft, ausgekoppelt werden (zumindest dann, wenn zusätzlich die beschriebene Reflexionsschicht vorgesehen ist).

Vorzugsweise kann durch die Fokussierung mittels der Kapselung und Quellentrennschicht (optional durch das mindestens eine Bündelungsmodul) erreicht werden, dass der Einfallswinkel $\varphi_E$ des sich in einem Sperrkörper ausbreitenden Lichts an der (optischen) Trennschicht (stets) größer als der Totalreflexionsgrenzwinkel $\varphi_G$ an der Trennschicht ist. Insbesondere gilt folgende Beziehung (a) für den Totalreflexionsgrenzwinkel $\varphi_G$:

$$(a)\ \varphi_G = \arcsin(n_{TS}/n_{SK}),$$

wobei $n_{TS}$ der Trennschichtbrechungsindex ist und $n_{SK}$ der (erste oder zweite) Sperrkörperbrechungsindex ist. Hierbei gilt, wie beschrieben, dass $n_{SK} > n_{TS}$ ist. Bei einer besonders bevorzugten Ausführungsform mit einem Sperrkörper aus Acrylglas oder Polycarbonat und einer polymeren Trennschicht und/oder einer Lufttrennschicht ergeben sich insbesondere folgende Werte:

$n_{SK} \approx 1{,}5 \dots 1{,}58$ (Acrylglas, Polycarbonat)
$n_{TS} \approx 1{,}45$ (Polymerfolie)

$n_{TS} \approx 1$ (Luft)
$\varphi_G \approx 65° \text{ bis } 75°$ (Polymerfolie)
$\varphi_G \approx 40°$ (Lufttrennschicht bzw. Luftspalt).

Da der Sperrkörperverbund in der Praxis von Luft umgeben sein kann, ist der Totalreflexionsgrenzwinkel $\varphi_G$ an diesen Grenzflächen ebenfalls $\varphi_G \approx 40°$.

Gemäß einer weiteren Ausführungsform der anmeldungsgemäßen Sperrkörperanordnung kann die mindestens eine Lichtquellenanordnung der Lichtquellenvorrichtung ansteuerbar sein. Vorzugsweise können sämtliche Lichtquellenanordnungen der Lichtquellenvorrichtung ansteuerbar sein. Dies meint insbesondere, dass eine Lichtquelle einer Lichtquellenanordnung abhängig von einem Ansteuersignal, das auf einem Befehlsdatensatz basiert und/oder diesen enthält, zumindest aktivierbar und deaktivierbar ist. Dies meint insbesondere weiter, dass bei Lichtquellenanordnungen mit verschiedenfarbigen Lichtquellen die verschiedenfarbigen Lichtquellen unterschiedlich ansteuerbar sind und/oder bei Lichtquellenanordnungen mit mehrfarbigen LEDs die aktivierten Farben der mehrfarbigen LEDs ansteuerbar sind. In der wahrnehmbaren Wirkung kann damit erreicht werden, dass eine Lichtquellenanordnung ansteuerbar verschiedenfarbiges Licht in den Lichteinkoppelbereich eines zugehörigen Sperrkörpers einkoppelt. Es versteht sich, dass auch andere veränderliche Größen der Lichtgenerierung der Lichtquellen einer Lichtquellenanordnung steuerbar bzw. einstellbar sein können, beispielweise die Helligkeit.

Eine Ansteuerbarkeit ermöglicht es insbesondere, dass nur die mindestens eine erste Lichtquellenanordnung aktiviert werden kann, während die mindestens eine zweite Lichtquellenanordnung deaktiviert ist, oder nur die mindestens eine zweite Lichtquellenanordnung aktiviert werden kann, während die mindestens eine erste Lichtquellenanordnung deaktiviert ist oder die ersten und zweiten Lichtquellenanordnungen deaktiviert sind oder aktiviert sind/werden.

Die Lichtquellenanordnungen können insbesondere abhängig von dem augenblicklichen Betriebszustand der Durchgangssperre und/oder einem (vorgegebenen) Zeitansteuerungsablaufmuster angesteuert werden. Ist die Durchgangssperre beispielsweise in einem Ausfall- bzw. Nicht-Benutzungszustand aufgrund eines Defekts, beispielsweise des Aktors zum Verfahren der Sperrkörperanordnung, können die Lichtquellenanordnungen entsprechend einem Zeitansteuerungsablaufmuster, das diesem Betriebszustand entspricht, derart angesteuert werden, dass beispielsweise ein rotes Kreuz auf der dritten Seitenfläche leuchtet.

Gemäß einer weiteren bevorzugten Ausführungsform der anmeldungsgemäßen Sperrkörperanordnung kann die Sperrkörperanordnung ein im Wesentlichen transparentes Sperrkörperpaneel mit einer zwischen einem ersten Außenpaneel und einem zweiten Außenpaneel liegenden Sperrkörperverbundausnehmung umfassen. Eine Innenform der Sperrkörperverbundausnehmung kann zu einer Außenform des Sperrkörperverbunds und/oder des Sperrkörperverbundsets korrespondieren, derart, dass der Sperrkörperverbund in die Sperrkörperverbundausnehmung (passgenau) einsetzbar ist. Wie beschrieben wurde, kann die Größe der Flachseiten eines Sperrkörperverbunds eine zu der Größe des anzuzeigenden bzw. zu beleuchtenden Symbols bzw. des entsprechend geformten Lichtauskoppelbereichs korrespondieren. Vorzugsweise kann bei einem plattenförmigen Sperrkörperverbund mit Flachseiten, die im Wesentlichen rechteckförmig sind, eine jeweilige Seitenlänge zwischen 200 mm und 250 mm liegen. Hierdurch lassen sich Lichtverluste deutlich reduzieren. Um dennoch eine Durchgangssperre mit einem Sperrelement mit einer (deutlich) größeren Fläche bereitzustellen, kann der Sperrkörperverbund insbesondere in ein Sperrkörperpaneel (mit den entsprechenden größeren Abmessungen) eingesetzt werden. Das Sperrkörperpaneel kann eine Länge zwischen vorzugsweise 30 cm und 120 cm und eine Breite zwischen 20 cm und 80 cm umfassen.

Ein Sperrkörperpaneel umfasst zwei Außenpaneele und ist insbesondere in Sandwichbauweise ausgeführt. Das Sperrkörperpaneel kann ein in einem Randbereich an mindestens zwei Schmalseiten des Sperrkörperpaneels zwischen dem ersten Außenpaneel und dem zweiten Außenpaneel angeordnetes (umlaufendes) (im Wesentlichen transparentes) Abstandselement umfassen. Insbesondere können die genannten Elemente miteinander verklebt sein und vorzugsweise die Sperrkörperverbundausnehmung bilden. Die Dicke des Abstandselements kann im Wesentlichen der Dicke des Sperrkörperverbunds entsprechen. Insbesondere kann die Sperrkörperverbundausnehmung in Form einer Tasche in dem Sperrkörperpaneel gebildet sein, in die der Sperrkörperverbund passgenau einsetzbar ist. Ein weiterer Vorteil eines Sperrkörperpaneels mit zwei äußeren Außenpaneelen ist, dass die äußeren Seiten des Sperrkörperverbunds und/oder des Sperrkörperverbundsets vor Beschädigungen geschützt sind, insbesondere in Form von Kratzern. Insbesondere ist festgestellt worden, dass Beschädigungen, wie Kratzer in einer dritten Seitenfläche, zu einer ungewollten Lichtauskopplung führen. Durch die Außenpaneele kann dies in sicherer Weise verhindert werden.

Das Sperrkörperpaneel kann insbesondere aus Polycarbonat gebildet sein.

Vorzugsweise kann zwischen dem Sperrkörperverbund und/oder dem Sperrkörperverbundset und den Außenpaneelen und/oder dem Abstandselement eine weitere im Wesentlichen optische transparente Trennschicht (wie sie z.B. zuvor beschrieben wurde) vorgesehen sein. Wenn der Sperrkörperverbund und/oder das Sperrkörperverbundset über mindestens eine Reflexionsschicht verfügt, kann an den entsprechenden Stellen auf eine optische Trennschicht verzichtet werden, bzw. bildet die Reflexionsschicht die optische Trennschicht. Zudem stellt eine Reflexionsschicht sicher, dass kein Licht ungewollt an einer Schmalseite des Sperrkörperverbunds und/oder Sperrkörperverbundsets austritt, wie beschrieben wurde.

Ein weiterer Aspekt der Anmeldung ist eine Durchgangssperre eines Zugangskontrollsystems. Die Durchgangssperre umfasst mindestens eine Basis. Die Durchgangssperre umfasst mindestens eine zwischen einer geöffneten Position und einer geschlossenen Position bewegbar an der Basis befestigte und zuvor beschriebene Sperrkörperanordnung.

Die Basis kann insbesondere durch mindestens einen (z.B. säulenartig gebildeten) Basiskörper gebildet sein. An der Basis kann mindestens eine zuvor beschriebene Sperrkörperanordnung befestigt sein. Die Durchgangssperre kann mindestens einen (ansteuerbaren) Aktor (z.B. einen Elektromotor) umfassen, eingerichtet zum Bewegen der Sperrkörperanordnung zwischen der geöffneten Position und der geschlossenen Position der Durchgangssperre. In der geöffneten Position ist der Durchgang durch die Durchgangssperre freigegeben. In der geschlossenen Position ist der Durchgang mittels der Sperrkörperanordnung der Durchgangssperre (physisch) gesperrt.

Die Durchgangssperre kann insbesondere an einem Eingang und/oder Ausgang eines kontrollierten Bereichs angeordnet sein. Der kontrollierte Bereich kann insbesondere eine Zugangsberechtigung bzw. Aufenthaltsberechtigung eines Nutzers zum Zugang bzw. Aufenthalt erfordern. Insbesondere kann die anmeldungsgemäße Durchgangssperre in einem ÖPV (Öffentlichen Personenverkehr) Zugangskontrollsystem verwendet werden, aber auch in anderen Zugangsanwendungen.

Um eine Berechtigung eines Nutzers zum Passieren der Durchgangssperre zu überprüfen, kann die Durchgangssperre, gemäß einer Ausführungsform der anmeldungsgemäßen Durchgangssperre, mindestens eine Schnittstelleneinrichtung umfassen. Die Schnittstelleneinrichtung kann eingerichtet sein zum Empfangen einer Zugangsberechtigung eines Nutzers. Die Durchgangssperre kann mindestens eine Freigabeeinrichtung umfassen. Die Freigabeeinrichtung kann eingerichtet sein zum Freigeben der Durchgangssperre, basierend auf einer Prüfung der empfangenen Zugangsberechtigung, insbesondere basierend auf dem Überprüfungsergebnis der empfangenen Zugangsberechtigung.

Wie bereits beschrieben wurde, kann eine Zugangsberechtigung durch ein Auswertemodul (in herkömmlicher Weise) ausgewertet werden. Das Auswertemodul kann in der Durchgangssperre integriert sein oder in einem Backendsystem des Zugangskontrollsystems. Insbesondere kann ein Vergleich der empfangenen Zugangsberechtigung mit gespeicherten zulässigen Zugangsberechtigungen oder nicht zulässigen Zugangsberechtigungen erfolgen.

Ergibt die Auswertung eine Berechtigung des Nutzers zum Passieren der Durchgangssperre, kann das Auswertemodul ein Freigabesignal erzeugen und insbesondere an die Freigabeeinrichtung übertragen. Bei einem Empfang des Freigabesignals kann die Freigabeeinrichtung den Aktor der Durchgangssperre mit einem entsprechenden Ansteuersignal ansteuern. Eine Verstellung der Sperrkörperanordnung in die geöffnete Position kann bewirkt werden, so dass der Nutzer die Durchgangssperre passieren kann. Ergibt die Auswertung eine Nicht-Berechtigung des Nutzers zum Passieren der Durchgangssperre, kann die Durchgangssperre gesperrt bleiben.

Vorzugsweise kann das Zugangskontrollsystem zumindest eine Durchgangssperre und mindestens ein mit der Durchgangssperre kommunikativ gekoppeltes Backendsystem (z.B. gebildet durch mindestens einen Server) umfassen. Beispielweise kann das Auswertemodul in dem entfernt von der Durchgangssperre angeordneten Backendsystem integriert sein. Ferner kann das Zugangskontrollsystem ein zuvor beschriebenes Zugangsmedium umfassen.

Gemäß einer besonders bevorzugten Ausführungsform der anmeldungsgemäßen Durchgangssperre kann die Durchgangssperre mindestens eine Lichtquellensteuerung umfassen. Die Lichtquellensteuerung kann eingerichtet sein zum Ansteuern der Lichtquellenvorrichtung, basierend auf mindestens einem vorgegebenen Zeitansteuerungsablaufmuster. Das Zeitansteuerungsablaufmuster kann zumindest einen ersten Aktivierungsstartzeitpunkt und eine erste Aktivierungszeitdauer der ersten Lichtquellenanordnung sowie einen zweiten Aktivierungsstartzeitpunkt, eine zweite Aktivierungszeitdauer der zweiten Lichtquellenanordnung und ein Wiederholungskriterium vorgeben. Optional kann ferner eine einzustellende Helligkeit oder dergleichen vordefiniert sein. Durch ein Zeitansteuerungsablaufmuster kann ein (insbesondere wiederholendes (definiert durch das Wiederholungskriterium) Abspielen einer auf der dritten Seitenfläche des ersten Sperrkörpers sichtbaren Symbolfolge (insbesondere in Form eines Lauflichts) definiert werden. Mit anderen Worten, die Lichteinkoppelung in die zumindest zwei Sperrkörper kann durch die Lichtsteuerung zeitlich synchronisiert bzw. gesteuert werden. Beispielsweise können die erste Lichtquellenanordnung und die zweite Lichtquellenanordnung zeitlich versetzt oder zeitgleich an bzw. ausgeschaltet werden, definiert durch das mindestens eine Zeitansteuerungsablaufmuster. Das Wiederholungskriterium kann eine Zeitdauer definieren, nach deren Ablauf ein Anschaltmuster erneut angewendet wird. Dadurch kann die Aussagekraft von Symbolen und/oder Farben noch weiter verbessert werden.

Gemäß einer weiteren Ausführungsform der anmeldungsgemäßen Durchgangssperre kann mindestens ein erstes Zeitansteuerungsablaufmuster und mindestens ein zweites sich von dem ersten Zeitansteuerungsablaufmuster unterscheidendes Zeitansteuerungsablaufmuster vorgegeben sein. Die Lichtquellensteuerung kann eingerichtet sein zum Auswählen eines der gespeicherten Zeitansteuerungsablaufmuster, basierend auf einem Betriebszustands der Durchgangssperre.

Gemäß einer weiteren Ausführungsform der anmeldungsgemäßen Durchgangssperre kann das Zeitansteuerungsablaufmuster einen ersten Farbcode für den ersten Aktivierungsstartzeitpunkt der ersten Lichtquellenanordnung und einen zweiten Farbcode für den zweiten Aktivierungsstartzeitpunkt der zweiten Lichtquellenanordnung vorgeben. Der Farbcode bestimmt insbesondere, mit welcher Farbe eine zu aktivierende Lichtquellenanordnung zum jeweiligen Aktivierungsstartzeitpunkt aktiviert wird.

Gemäß einer bevorzugten Ausführungsform der anmeldungsgemäßen Durchgangssperre kann die Durchgangssperre mindestens ein Detektionsmodul umfassen. Das Detektionsmodul kann eingerichtet sein zum Detektieren eines (augenblicklichen) Betriebszustands der Durchgangssperre. Die Durchgangssperre kann mindestens eine Lichtquellensteuerung umfassen. Die Lichtquellensteuerung kann eingerichtet sein zum Ansteuern der Lichtquellenvorrichtung, basierend auf dem detektierten Betriebszustand der Durchgangssperre. Insbesondere kann ein Zeitansteuerungsablaufmuster aus einer Mehrzahl von vorgegebenen Zeitansteuerungsablaufmustern ausgewählt werden, abhängig von dem detektierten Betriebszustand.

Wie bereits beschrieben wurde, kann eine Durchganssperre verschiedene (vordefinierte) Betriebszustände einnehmen bzw. in diese durch ein entsprechendes Zustandssteuersignal gesetzt werden. Das Detektionsmodul kann insbesondere den augenblicklichen Betriebszustand detektieren, beispielsweise indem das Detektionsmodul eingerichtet ist zum Empfangen und Auswerten des Zustandssteuersignals.

Beispielhafte und nicht abschließende Beispiele von (vordefinierbaren) Betriebszuständen sind ein erster Durchgangsrichtungszustand (Durchgang nur in eine erste Richtung möglich und in die Gegenrichtung gesperrt), ein zweiter Durchgangsrichtungszustand (Durchgang nur in die Gegenrichtung möglich und in die erste Richtung gesperrt), ein dritter Durchgangsrichtungszustand (Durchgang in beide Richtungen möglich), ein Sperrzustand, ein Validierungszustand (Freigeben der Durchgangsperre beispielsweise aufgrund einer positiven Prüfung einer Zugangsberechtigung eines Nutzers), ein Ausfallzustand und ein Wartungszustand. Jedem dieser Betriebszustände kann ein Zeitansteuerungsablaufmuster zugeordnet sein.

Insbesondere kann auch der Validierungszustand kombiniert werden mit einem der drei Durchgangsrichtungszustände, d.h. die Durchgangssperre wird betrieben zum Freigeben beispielsweise aufgrund einer positiven Prüfung einer Zugangsberechtigung eines Nutzers, wobei dem Nutzer die Prüfung der Zugangsberechtigung ausschließlich in der ersten Durchgangsrichtung angeboten wird (und einem anderen Nutzer in der Gegenrichtung nicht), oder wobei dem Nutzer die Prüfung der Zugangsberechtigung ausschließlich in der Gegenrichtung angeboten wird (und einem anderen Nutzer in der ersten Durchgangsrichtung nicht), oder wobei zwei Nutzern die Prüfung ihrer jeweiligen Zugangsberechtigung in beiden Durchgangsrichtungen angeboten wird, und wobei die Durchgangssperre sich für denjenigen Nutzer, dessen Zugangsberechtigung zuerst positiv geprüft wurde, in der entsprechenden Durchgangsrichtung öffnet.

Das Detektionsmodul kann in der Lichtquellensteuerung integriert sein. Die Lichtquellensteuerung ist eingerichtet zum Ansteuern der ansteuerbaren Lichtquellen der Lichtquellenvorrichtung. Vorzugsweise kann eine Zuordnungstabelle (oder dergleichen) in der Lichtquellensteuerung gespeichert sein. In der Zuordnungstabelle kann jedem Betriebszustand der Durchgangssperre (in eindeutiger Weise) ein Befehlsdatensatz in Form eines vorgegebenen Zeitansteuerungsablaufmuster zugeordnet sein.

In einer weiteren Ausführungsform kann die Zuordnungstabelle (oder dergleichen) in einem Datenspeicher außerhalb der Durchgangssperre derart gespeichert sein, dass die Lichtquellensteuerung auf die gespeicherten Befehlsdatensätze über ein Datennetzwerk zugreifen kann. In dieser Ausführungsform kann die Zuordnungstabelle beispielsweise gespeichert sein in einem Datenspeicher einer Rechnereinheit zur Steuerung eine Reihe von nebeneinander angeordneten Durchgangssperren ("Gate Array") oder auf einer Rechnereinheit zur Steuerung mehrerer Gate Arrays an einer Station oder einem Bahnhof oder auf einer entfernt angeordneten zentralen Rechnereinheit, wie einem Backendsystem und/oder Cloud Computersystem.

Basierend auf dem detektierten Betriebszustand kann die Lichtquellensteuerung das zugeordnete Zeitansteuerungsablaufmuster bestimmen und insbesondere die Lichtquellenvorrichtung mit einem Befehlsdatensatz entsprechend dem bestimmten Zeitansteuerungsablaufmuster ansteuern.

Ein noch weiterer Aspekt der Anmeldung ist ein Verfahren zum Betreiben einer zuvor beschriebenen Durchgangssperre, umfassend:

- Ansteuern, durch eine Lichtquellensteuerung, der Lichtquellenvorrichtung der Sperrkörperanordnung, basierend auf einem Zeitansteuerungsablaufmuster,
- wobei das Zeitansteuerungsablaufmuster zumindest einen ersten Aktivierungsstartzeitpunkt und eine erste Aktivierungszeitdauer der ersten Lichtquellenanordnung, einen zweiten Aktivierungsstartzeitpunkt und eine zweite Aktivierungszeitdauer der zweiten Lichtquellenanordnung und ein Wiederholungskriterium vorgibt.

Insbesondere kann das Verfahren ein Detektieren eines Betriebszustands der Durchgangssperre und ein Auswählen eines Zeitansteuerungsablaufmusters aus zumindest zwei unterschiedlichen Zeitansteuerungsablaufmustern umfassen, basierend auf dem detektierten Betriebszustand. Dann kann die Lichtquellenvorrichtung entsprechend dem ausgewählten bzw. bestimmten Zeitansteuerungsablaufmuster angesteuert bzw. betrieben werden.

Weiter kann das Verfahren zum Betreiben einer zuvor beschriebenen Durchgangssperre umfassen, dass das Zeitansteuerungsablaufmuster einen ersten Farbcode für den ersten Aktivierungsstartzeitpunkt der ersten Lichtquellenanordnung und einen zweiten Farbcode für den zweiten Aktivierungsstartzeitpunkt der zweiten Lichtquellenanordnung vorgibt. Der Farbcode bestimmt insbesondere, mit welcher Farbe eine zu aktivierende Lichtquellenanordnung zum jeweiligen Aktivierungsstartzeitpunkt aktiviert wird.

Damit kann verfahrensseitig sichergestellt werden, dass Lichtquellenanordnungen, die steuerbar unterschiedlich farbiges Licht generieren können, auch entsprechend angesteuert werden können.

Ein zuvor beschriebenes Modul, eine Einrichtung, eine Vorrichtung etc. kann zumindest teilweise Hardwareelemente (z.B. Prozessor, Speichermittel etc.) und/oder zumindest teilweise Softwareelemente (z.B. ausführbaren Code) umfassen. Es sei ferner angemerkt, dass Begriffe, wie "erste"; "zweite", "weitere" etc. nicht eine Reihenfolge angeben, sondern insbesondere zur Unterscheidung zweier Elemente (z.B. Sperrkörper, Lichtquellenanordnung, Seitenfläche, Bereich etc.) dienen.

Die Merkmale der Sperrkörperverbunde, der Sperrkörperverbundsets, Sperrkörperanordnungen, Durchgangssperren, Verfahren und Zugangskontrollsysteme sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, den anmeldungsgemäßen Sperrkörperverbund, das anmeldungsgemäße Sperrkörperverbundset, die anmeldungsgemäße Sperrkörperanordnung, die anmeldungsgemäße Durchgangssperre, das anmeldungsgemäße Zugangskontrollsystem und das anmeldungsgemäße Verfahren auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:

Fig. 1a eine schematische (Schnitt-)Ansicht eines Ausführungsbeispiels eines Sperrkörperverbunds gemäß der vorliegenden Anmeldung, wobei Figur 1a insbesondere dem Schnitt A - A in Figur 1b entspricht,

Fig. 1b eine weitere schematische (Vorder-)Ansicht des Ausführungsbeispiel nach Figur 1a,

Fig. 2　eine schematische Ansicht eines Ausführungsbeispiels einer Sperrkörperanordnung gemäß der vorliegenden Anmeldung,

Fig. 3　schematische Ansichten eines weiteren Ausführungsbeispiels einer Sperrkörperanordnung gemäß der vorliegenden Anmeldung,

Fig. 4　schematische Ansichten eines weiteren Ausführungsbeispiels eines Sperrkörperverbunds gemäß der vorliegenden Anmeldung in verschiedenen Beleuchtungszuständen,

Fig. 5　schematische Ansichten eines weiteren Ausführungsbeispiels eines Sperrkörperverbunds gemäß der vorliegenden Anmeldung in verschiedenen Beleuchtungszuständen,

Fig. 6　eine schematische Ansicht eines Ausführungsbeispiels eines Sperrkörperverbundsets gemäß der vorliegenden Anmeldung,

Fig. 7a　eine schematische Ansicht eines weiteren Ausführungsbeispiels eines Sperrkörperverbunds gemäß der vorliegenden Anmeldung,

Fig. 7b　eine weitere schematische Ansicht des Ausführungsbeispiel nach Figur 7a,

Fig. 8a　eine schematische Ansicht eines weiteren Ausführungsbeispiels einer Sperrkörperanordnung gemäß der vorliegenden Anmeldung,

Fig. 8b　eine weitere schematische Ansicht des Ausführungsbeispiel nach Figur 8a,

Fig. 9　eine schematische Ansicht eines Beispiels zweier Sperrkörper eines Sperrkörperverbunds mit einer Mehrzahl von Lichtquellen,

Fig. 10a　schematische Ansichten eines weiteren Ausführungsbeispiels eines Sperrkörperverbunds gemäß der vorliegenden Anmeldung,

Fig. 10b　eine weitere schematische Ansicht des Ausführungsbeispiel nach Figur 10a,

Fig. 11　eine schematische Ansicht eines weiteren Ausführungsbeispiels eines Sperrkörperverbunds gemäß der vorliegenden Anmeldung,

Fig. 12　eine schematische Ansicht eines weiteren Ausführungsbeispiels eines Sperrkörperverbunds gemäß der vorliegenden Anmeldung,

Fig. 13　eine schematische Ansicht eines weiteren Ausführungsbeispiels eines Sperrkörperverbunds gemäß der vorliegenden Anmeldung,

Fig. 14　eine schematische Ansicht eines Ausführungsbeispiels eines Zugangskontrollsystems gemäß der vorliegenden Anmeldung mit einem Ausführungsbeispiel einer Durchgangssperre gemäß der vorliegenden Anmeldung, und

Fig. 15　ein Diagramm eines Ausführungsbeispiels eines Verfahrens gemäß der vorliegenden Anmeldung.

Nachfolgend werden für ähnliche Elemente ähnliche Bezugszeichen verwendet.

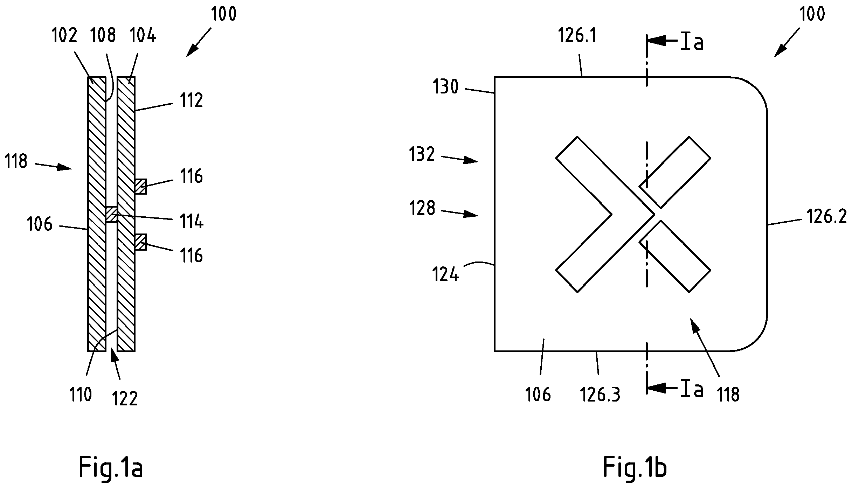

Die Figuren 1a und 1b zeigen verschiedene schematische Ansichten eines Ausführungsbeispiels eines Sperrkörperverbunds 100 gemäß der vorliegenden Anmeldung. Insbesondere zeigt die Figur 1a die Schnittansicht A - A von Figur 1b, und die Figur 1b zeigt eine Vorderansicht.

Der Sperrkörperverbund 100 ist insbesondere ein Bestandteil einer (nicht dargestellten) Sperrkörperanordnung oder bildet die Sperrkörperanordnung einer Durchgangssperre eines Zugangskontrollsystems. Die Sperrkörperanordnung dient der Verwendung als physisches Sperrelement in einer Durchgangssperre.

Der Sperrkörperverbund 100 ist insbesondere ein im Wesentlichen optisch transparenter Sperrkörperverbund 100. Der Sperrkörperverbund 100 umfasst zumindest einen ersten Sperrkörper 102 und einen zweiten Sperrkörper 104, die jeweils im Wesentlichen optisch transparent sind. Beispielsweise können die Sperrkörper 102, 104 aus Acrylglas und/oder Polymercarbonat hergestellt sein.

Der erste Sperrkörper 102 umfasst eine erste einen ersten Lichteinkoppelbereich 128 aufweisende Seitenfläche 124, eine zweite mindestens einen ersten Lichtauskoppelbereich 114 aufweisende Seitenfläche 108 und eine dritte eine Sichtfläche 118 des Sperrkörperverbunds 100 bildende und der zweiten Seitenfläche 108 gegenüberliegende Seitenfläche 106. Der zweite Sperrkörper 104 kann insbesondere identisch zu dem ersten Sperrkörper 102 gebildet sein. Der zweite Sperrkörper 104 umfasst eine erste einen zweiten Lichteinkoppelbereich 132 aufweisende Seitenfläche 130, eine zweite mindestens einen zweiten Lichtauskoppelbereich 116 aufweisende Seitenfläche 112 und eine dritte der zweiten Seitenfläche 112 gegenüberliegende Seitenfläche 110.

Wie aus den Figuren 1a und 1b zu erkennen ist, sind der erste Sperrkörper 102 und der zweite Sperrkörper 104 vorzugsweise plattenförmig bzw. scheibenförmig gebildet. Der Umriss eines Sperrkörpers 102, 104 kann im Wesentlichen rechteckförmig sein (wie dargestellt, können beispielsweise Ecken abgerundet sein). Eine erste Seitenfläche 124, 130 kann vorzugsweise eine erste Schmalseite sein. Eine zweite Seitenfläche 108, 112 kann vorzugsweise eine erste Flachseite sein. Und eine dritte Seitenfläche 106, 110 kann die weitere Flachseite sein, die der ersten Flachseite gegenüberliegt. Ferner kann ein Sperrkörperverbund 100 weitere Schmalseiten 126.1, 126.2, 126.3 umfassen.

Die zumindest zwei Sperrkörper 102, 104 sind miteinander verbunden. Insbesondere können die zumindest zwei Sperrkörper 102, 104 zumindest abschnittsweise miteinander verklebt sein. Es versteht sich, dass bei Varianten der Anmeldung auch andere Verbindungsarten eingesetzt werden können.

Anmeldungsgemäß ist die die dritte Seitenfläche 110 des zweiten Sperrkörpers 104 mit der zweiten Seitenfläche 108 des ersten Sperrkörpers 102 verbunden.

Vorzugsweise kann der erste (nachfolgend noch näher beschriebene) Lichtauskoppelbereich 114 eine beidseitig klebende nicht transparente Abdeckschicht umfassen. Beispielsweise kann die Abdeckschicht beidseitig mit einem optisch transparenten Klebstoff beschichtet sein. In einfacher Weise können die Sperrkörper 102, 104 miteinander durch die (ohnehin vorgesehene) Abdeckschicht gefügt sein zum Bilden des Sperrkörperverbunds 100.

Zwischen dem ersten Sperrkörper 102 und dem zweiten Sperrkörper 104 ist eine Trennschicht 122 angeordnet. Die Trennschicht 122 ist zumindest eine teilweise optisch transparente Trennschicht 122. In dem dargestellten bevorzugten Ausführungsbeispiel ist die Trennschicht 122 zumindest teilweise aus der nicht transparenten Abdeckschicht und einer neben der Abdeckschicht angeordneten (transparenten) Luftschicht gebildet.

Ein Trennschichtbrechungsindex $n_{TS}$ der Trennschicht 122 kann zumindest kleiner als ein erster Sperrkörperbrechungsindex $n_{SK1}$ des ersten Sperrkörpers 102 und ein zweiter Sperrkörperbrechungsindex $n_{SK2}$ des zweiten Sperrkörpers 104 sein. Hierdurch kann erreicht werden, dass der Sperrkörperverbund 100 im Wesentlichen optisch transparent ist, gleichzeitig jedoch eine optische Trennung zwischen dem ersten Sperrkörper 102 und dem zweiten Sperrkörper 104 durch die Trennschicht 122 bereitgestellt wird. So kann durch die anmeldungsgemäße Trennschicht 122 verhindert werden, dass Licht, das über den ersten Lichteinkoppelbereich 128 und im Wesentlichen orthogonal zu der ersten Seitenfläche 124 in den ersten Sperrkörper 102 eingekoppelt wird, in den zweiten Sperrkörper 104 gelangen kann. Auch kann sichergestellt werden, dass Licht, das über den zweiten Lichteinkoppelbereich 132 und im Wesentlichen orthogonal zu der ersten Seitenfläche 130 in den zweiten Sperrkörper 104 eingekoppelt wird, nur dann in den ersten Sperrkörper 102 gelangen kann, wenn es durch den zweiten Lichtauskoppelbereich 116 umgelenkt wird, also auf diesen aufgetroffen ist. Das übrige Licht kann nicht in den ersten Sperrkörper 102 gelangen.

Anmeldungsgemäß ist durch den ersten Lichtauskoppelbereich 114 und den zweiten Lichtauskoppelbereich 116 ausgekoppeltes Licht an der dritten Seitenfläche 106 des ersten Sperrkörpers 102 sichtbar. Die dritte Seitenfläche 106 des ersten Sperrkörpers 102 bildet insbesondere die Vorderseite und weist die Sichtfläche 118 des gesamten Sperrkörperverbunds 100 auf. Licht, das in den ersten Sperrkörper 102 eingekoppelt wird, wird mittels des ersten Lichtauskoppelbereichs 114 umgelenkt und tritt an der dritten Seitenfläche 106 des ersten Sperrkörpers 102 aus. Insbesondere ist für einen an der Vorderseite befindlichen Nutzer eine leuchtende Fläche sichtbar, die der Form bzw. dem Umriss des ersten Lichtauskoppelbereichs 114 entspricht. Licht, das in den zweiten Sperrkörper 104 eingekoppelt wird, wird mittels des zweiten Lichtauskoppelbereichs 116 umgelenkt und tritt an der dritten Seitenfläche 110 des zweiten Sperrkörpers 104 aus, durchdringt den Luftspalt bzw. die Luftschicht, dringt dann in den ersten Sperrkörper 102 ein und tritt an der dritten Seitenfläche 106 des ersten Sperrkörpers 102 wieder aus. Insbesondere ist für einen an der Vorderseite befindlichen Nutzer eine leuchtende Fläche sichtbar, die der Form bzw. dem Umriss des zweiten Lichtauskoppelbereichs 116 entspricht. Wenn gleichzeitig Licht in den ersten Sperrkörper 102 und den zweiten Sperrkörper 104 eingekoppelt wird, ist für einen an der Vorderseite befindlichen Nutzer eine leuchtende Fläche sichtbar, die insbesondere der Form bzw. dem Umriss des ersten Lichtauskoppelbereichs 114 und des zweiten Lichtauskoppelbereichs 116 entspricht. Insbesondere können die genannten Lichtauskoppelbereiche 114, 116 derart versetzt zueinander angeordnet sein, dass für einen an der Vorderseite befindlichen Nutzer eine leuchtende Fläche sichtbar ist, die insbesondere der Form bzw. dem Umriss des ersten Lichtauskoppelbereichs 114 und des zweiten Lichtauskoppelbereichs 116 entspricht.

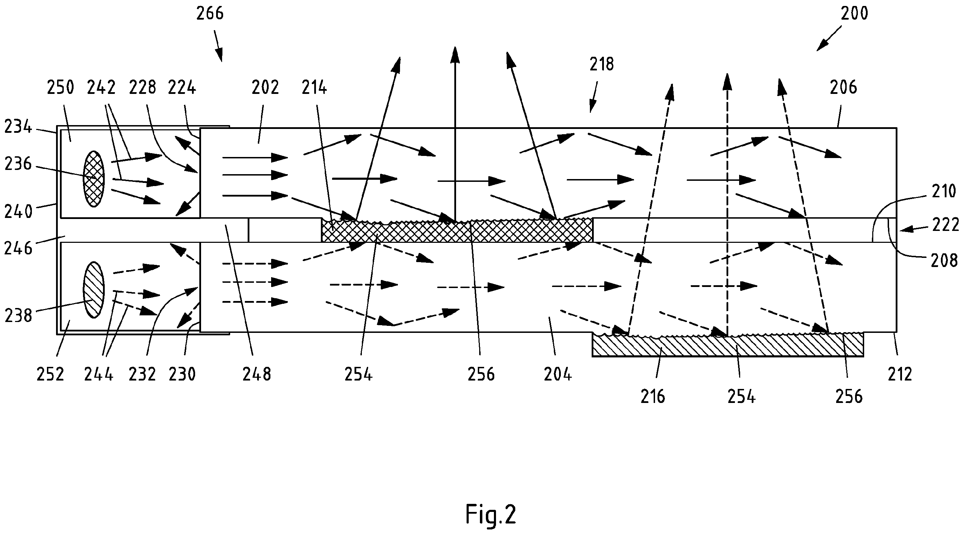

Die Figur 2 zeigt eine schematische (Schnitt-)Ansicht eines Ausführungsbeispiels einer Sperrkörperanordnung 266 gemäß der vorliegenden Anmeldung mit einem Ausführungsbeispiel eines Sperrkörperverbunds 200 gemäß der vorliegenden Anmeldung. Zur Vermeidung von Wiederholungen werden nachfolgend im Wesentlichen nur die Unterschiede zu dem Ausführungsbeispiel nach den Figuren 1a und 1b beschrieben, und ansonsten wird auf die vorherigen Ausführungen verwiesen. Die Figur 2 dient insbesondere dazu, die Funktionsweise einer Sperrkörperanordnung 266 gemäß der vorliegenden Anmeldung noch näher zu erläutern.

Die Sperrkörperanordnung 266 umfasst eine Lichtquellenvorrichtung 234. Die dargestellte Lichtquellenvorrichtung 234 umfasst mindestens eine erste Lichtquellenanordnung 236, insbesondere gebildet aus einer Mehrzahl von ersten Lichtquellen, und mindestens eine zweite Lichtquellenanordnung 238, insbesondere gebildet aus einer Mehrzahl von zweiten Lichtquellen. Eine Lichtquelle kann in Form einer einfarbigen oder mehrfarbigen LED gebildet sein. Eine Lichtquelle kann einfarbig oder ansteuerbar in mehreren Farben Licht generieren, so dass die jeweilige Lichtquellenanordnung 236, 238 Licht generiert, das als ausschließlich einfarbig oder ansteuerbar in unterschiedlichen Farben wahrnehmbar ist.

Die Lichtquellenvorrichtung 234 ist eingerichtet zum Einkoppeln von Licht in den ersten Lichteinkoppelbereich 228, der insbesondere durch die gesamte erste Seitenfläche 224 des ersten Sperrkörpers 202 gebildet ist, und zum Einkoppeln von Licht in den zweiten Lichteinkoppelbereich 232, der insbesondere durch die gesamte erste Seitenfläche 230 des zweiten Sperrkörpers 204 gebildet ist.

Wie zu erkennen ist, ist die Lichtquellenvorrichtung 234 an einer Schmalseite bzw. einer Kante des ersten Sperrkörpers 202 und insbesondere auch des zweiten Sperrkörpers 204 angeordnet. Insbesondere bildet diese jeweilige Schmalseite bzw. bilden die ersten Seitenflächen 224, 230 im Wesentlichen die jeweiligen Lichteinkoppelbereiche 228, 232.

Wie zu erkennen ist, ist die Lichtquellenvorrichtung 234 an einer Schmalseite des Sperrkörperverbunds 200 angeordnet. Die dargestellte Lichtquellenvorrichtung 234 umfasst eine optisch nicht transparente Kapselung 240 bzw. ein Gehäuse. Mit anderen Worten, Licht kann nicht durch die Kapselung 240 hindurchtreten. Beispielsweise kann die Kapselung 240 aus Metall oder einem anderen lichtundurchlässigen Material hergestellt sein.

Die Kapselung 240 ist vorzugsweise derart angeordnet, dass das von der Lichtquellenvorrichtung 234, insbesondere von den Lichtquellenanordnungen 236, 238, generierte Licht 242, 244 (angedeutet durch die Pfeile) nur in den ersten Lichteinkoppelbereich 228 und in den zweiten Lichteinkoppelbereich 232 eingekoppelt wird. Mit anderen Worten, die zumindest zwei Lichtquellenanordnungen 236, 238 sind vorliegend vollständig von der Kapselung 240 und den Sperrkörpern 202, 204, also insbesondere den ersten Seitenflächen 224, 230 der Sperrkörper 202, 204 umgeben bzw. eingekapselt. Wie zu erkennen ist, weist die Kapselung 240 hierfür insbesondere eine U-Querschnittsform auf.

Ferner ist in der Lichtquellenvorrichtung 234 zwischen der mindestens einen ersten Lichtquellenanordnung 236 und der mindestens einen zweiten Lichtquellenanordnung 238 eine optisch nicht transparente Quellentrennschicht 246 aus einem lichtundurchlässigen Material (z.B. Metall) angeordnet. Die Quellentrennschicht 246 verläuft von einer Innenwand der Kapselung 240 bis zumindest zu dem ersten bzw. zweiten Sperrkörper 202, 204. Vorzugsweise kann ein Ende der Quellentrennschicht 246 in einen Zwischenraum 248 zwischen dem ersten Sperrkörper 202 und dem zweiten Sperrkörper 204 hineinragen. An dieses Ende der Quellentrennschicht 246 kann sich die optisch transparente Trennschicht 222 anschließen.

Die Quellentrennschicht 246 kann insbesondere Teil der Kapselung 240 und vorzugsweise aus dem gleichen Material wie die Kapselung 240 sein. Durch die Quellentrennschicht 246 wird in dem vorliegenden Ausführungsbeispiel eine erste Teilkapselung 250 und eine zweite Teilkapselung 252 bereitgestellt.

Die mindestens eine erste Lichtquellenanordnung 236 ist insbesondere nur in der ersten Teilkapselung 250 angeordnet, und die mindestens eine zweite Lichtquellenanordnung 238 ist nur in der zweiten Teilkapselung 252 angeordnet. Eine Teilkapselung 250, 252 der ersten bzw. zweiten Lichtquellenanordnungen 236, 238 bewirkt insbesondere, dass Licht 242, 244 in den jeweils anderen Sperrkörper 204, 202 gestreut wird.

Insbesondere kann durch eine jeweilige Teilkapselung 250, 252 eine Lichtausbreitung vorwiegend orthogonal zur Oberfläche des Lichteinkoppelbereichs 228, 232 bereitgestellt werden. Optional kann die Lichtquellenvorrichtung insbesondere vor jeder Lichtquellenanordnung nicht gezeigte Fokussierungsmodule (z.B. Linsen) umfassen, um das erzeugte Licht 242, 244 noch weiter zu fokussieren.

Wie ferner in der Figur 2 durch die Pfeile (unterschiedliche Pfeile sollen insbesondere Licht unterschiedlicher Wellenlänge symbolisieren) angedeutet ist, breitet sich das jeweils eingekoppelte Licht (insbesondere aufgrund der beschriebenen Fokussierung) im Wesentlichen orthogonal zu der Oberfläche der jeweiligen Lichteinkoppelbereiche 228, 232 aus.

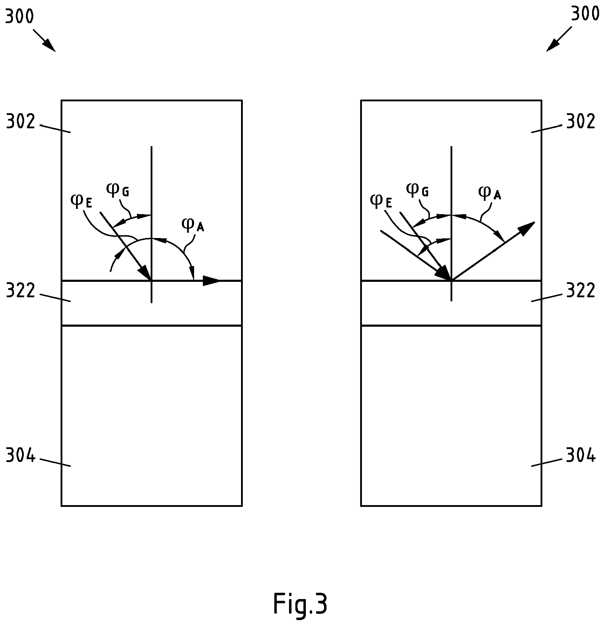

Wie zu erkennen ist, wird das Licht an den Grenzflächen eines Sperrkörpers 202, 204 überwiegend derart reflektiert, dass es den jeweiligen Sperrkörper 202, 204 (außer aufgrund einer Streuung durch einen Lichtauskoppelbereich 214, 216) nicht verlässt. Grund hierfür ist insbesondere, dass der Brechungsindex der umgebenden Luft und/oder der Trennschicht 222 (die ebenfalls aus Luft bestehen kann) kleiner ist als der erste Sperrkörperbrechungsindex des ersten Sperrkörpers 202 und der zweite Sperrkörperbrechungsindex des zweiten Sperrkörpers 204. Dies wird nachfolgend mit Hilfe der Figur 3 noch näher erläutert.

Die Figur 3 zeigt schematische Ansichten eines Ausschnitts eines Sperrkörperverbunds 300, umfassend einen ersten Sperrkörper 302 und einen zweiten Sperrkörper 304 gemäß der vorliegenden Anmeldung mit verschiedenen Einfallwinkeln von Licht.

Auf der linken Seite der Figur 3 ist ein (Grenz-) Fall (Lichteinfall im Grenzwinkel) dargestellt, bei dem der Einfallswinkel $\varphi_E$ des Lichts gleich dem Grenzwinkel $\varphi_G$ ist. Wie zu erkennen ist, führt das dazu, dass der Ausfallwinkel $\varphi_A = 90°$ ist. Auf der rechten Seite der Figur 3 ist der (Normal-) Fall (Totalreflexion) dargestellt, bei dem der Einfallswinkel $\varphi_E$ des Lichts größer als der Grenzwinkel $\varphi_G$ ist. In diesem Fall wird das Licht reflektiert. Der Ausfallwinkel $\varphi_A$ ist insbesondere gleich dem Einfallwinkel $\varphi_E$. Wie bereits beschrieben wurde, kann insbesondere durch die Lichtquellenvorrichtung (insbesondere durch die Kapselung mit der Quellentrennschicht) das eingekoppelte Licht derart fokussiert werden, dass der Einfallswinkel $\varphi_E$ des Lichts an der Trennschicht 322 (stets) größer als der Grenzwinkel $\varphi_G$ ist.

Wie in der Figur 2 dargestellt ist, umfasst die zweite Seitenfläche 208 des ersten Sperrkörpers 202 einen ersten Lichtauskoppelbereich 214, und die zweite Seitenfläche 212 des zweiten Sperrkörpers 204 umfasst einen zweiten Lichtauskoppelbereich 216. Ein Lichtauskoppelbereich 214, 216 ist vorliegend gebildet durch einen aufgerauten Oberflächenbereich 256 und durch eine über dem aufgerauten Oberflächenbereich 256 angeordnete optisch intransparente Abdeckschicht 254 (insbesondere eine (weiße) Abdeckfolie). Ein aufgerauter Oberflächenbereich 256 ist insbesondere ein Teilbereich einer zweiten Seitenfläche 208, 212, der rauer ist (insbesondere einen größeren Mittenrauwert aufweist) als die Oberfläche der Umgebungsfläche bzw. des weiteren Teilbereichs der zweiten Seitenfläche 208, 212 (mit einen geringeren Mittenrauwert).

Wie in der Figur 2 schematisch angedeutet, wird Licht, das auf einen Lichtauskoppelbereich 214, 216 trifft, derart abgelenkt, dass es den Sperrkörperverbund 200 an der dritten Seitenfläche 206 mit der Sichtfläche 218 des Sperrkörperverbunds 200 verlässt. Insbesondere entstehen durch die Aufrauhung 256 im Lichtauskoppelbereich 214, 216 Microflächen, die gegenüber den glatten Seitenflächen 208, 212 derart verkippt sind, dass an ihnen das auftreffende Licht derart reflektiert wird, dass das Licht den jeweiligen Sperrkörper 202, 204 an der jeweiligen einer zweiten Seitenfläche 208, 212 gegenüberliegenden dritten Seitenfläche 206, 210 (in definierter Weise) verlässt. Zusätzlich kann in dem vorliegenden Ausführungsbeispiel vorgesehen sein, dass Licht an den den ersten Seitenflächen 224, 230 gegenüberliegenden Seitenflächen bzw. Schmalkanten austreten kann.

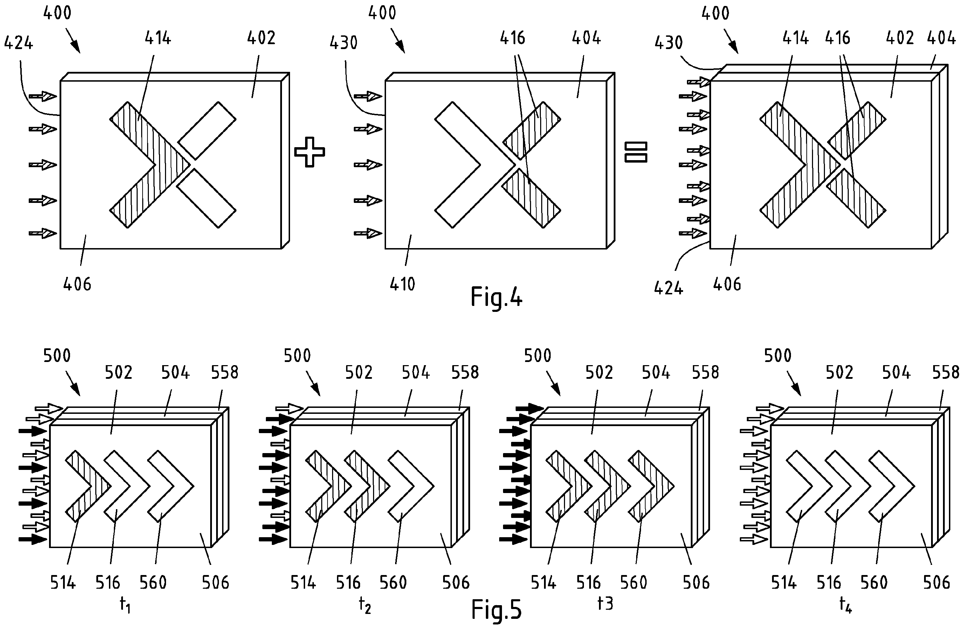

Die Figur 4 zeigt schematische (Vorder-)Ansichten eines weiteren Ausführungsbeispiels eines Sperrkörperverbunds 400 gemäß der vorliegenden Anmeldung in verschiedenen Beleuchtungszuständen des Sperrkörperverbunds. Zur Vermeidung von Wiederholungen werden nachfolgend im Wesentlichen nur die Unterschiede zu den vorherigen Ausführungsbeispielen beschrieben, und ansonsten wird auf die vorherigen Ausführungen verwiesen. Zur besseren Übersicht ist in dem linken Bereich der Figur 4 nur der erste Sperrkörper 402 und in dem mittleren Bereich der Figur 4 nur der zweite Sperrkörper 404 dargestellt.

Der erste Lichtauskoppelbereich 414 bildet vorliegend eine erste Symbolform insbesondere in Form eines Pfeiles bzw. einer Pfeilspitze. Mit anderen Worten, ein Teilbereich der zweiten Seitenfläche des ersten Sperrkörpers 402 ist insbesondere entsprechend der ersten Symbolform aufgeraut. Beim Einkoppeln von Licht in die erste Seitenfläche 424 des ersten Sperrkörpers 402 ist der Pfeil für einen Nutzer, der sich vor der dritten Seitenfläche 406 befindet, sichtbar. Wenn beispielsweise grünes Licht eingekoppelt wird, ist auf der dritten Seitenfläche 406 ein grün leuchtender Pfeil sichtbar.

Der zweite Lichtauskoppelbereich 416 bildet vorliegend eine Teilsymbolform insbesondere in Form eines Teilkreuzes. Mit anderen Worten, ein Teilbereich der zweiten Seitenfläche des zweiten Sperrkörpers 404 ist insbesondere entsprechend der Teilsymbolform aufgeraut. Beim Einkoppeln von Licht in die erste Seitenfläche 430 des zweiten Sperrkörpers 404 ist das Teilsymbol für einen Nutzer, der sich vor der dritten Seitenfläche 410 des zweiten Sperrkörpers 404 befindet, sichtbar.

In dem rechten Bereich der Figur 4 ist der Sperrkörperverbund 400 in einem Betriebszustand dargestellt, bei dem Licht in den ersten Sperrkörper 402 und den zweiten Sperrkörper 404 eingekoppelt wird. Wie dargestellt, ist in diesem Betriebszustand für einen Nutzer, der sich vor der dritten Seitenfläche 406 befindet, eine zusammengesetzte Symbolform sichtbar, die aus dem ersten Lichtauskoppelbereich 414 und dem zweiten Lichtauskoppelbereich 416 gebildet ist. Die zusammengesetzte Symbolform ist vorliegend ein Kreuz, das sich aus dem Pfeil und dem Teilkreuz zusammensetzt. Wenn beispielsweise rotes Licht in den ersten Sperrkörper 402 und den zweiten Sperrkörper 404 eingekoppelt wird, ist auf der dritten Seitenfläche 406 ein rot leuchtendes Kreuz sichtbar.

Die Figur 5 zeigt schematische Ansichten eines weiteren Ausführungsbeispiels eines Sperrkörperverbunds 500 gemäß der vorliegenden Anmeldung in verschiedenen Beleuchtungszuständen bzw. zu verschiedenen Betriebszeitpunkten $t_1$ bis $t_4$. Zur Vermeidung von Wiederholungen werden nachfolgend im Wesentlichen die Unterschiede zu den vorherigen Ausführungsbeispielen beschrieben, und ansonsten wird auf die vorherigen Ausführungen verwiesen.

Wie zu erkennen ist, weist der dargestellte Sperrkörperverbund 500 einen ersten Sperrkörper 502, einen zweiten Sperrkörper 504 und einen dritten Sperrkörper 558 auf. Der erste Sperrkörper 502 weist an einer zweiten Seitenfläche einen ersten Lichtauskoppelbereich 514 auf, insbesondere in Form einer ersten Symbolform (beispielhaft ein Pfeil). Der zweite Sperrkörper 504 weist an einer zweiten Seitenfläche einen zweiten Lichtauskoppelbereich 516 auf, insbesondere in Form einer zweiten Symbolform (beispielhaft ein Pfeil). Der dritte Sperrkörper 558 weist an einer zweiten Seitenfläche einen dritten Lichtauskoppelbereich 560 auf, insbesondere in Form einer dritten Symbolform (beispielhaft ein Pfeil).

Die (für eine bessere Übersicht nicht dargestellte) Lichtquellenvorrichtung einer entsprechenden Sperrkörperanordnung kann mindestens eine erste ansteuerbare Lichtquellenanordnung, mindestens eine zweite ansteuerbare Lichtquellenanordnung und mindestens eine dritte ansteuerbare Lichtquellenanordnung umfassen. Die Lichtquellenanordnungen können insbesondere durch eine (nicht gezeigte) Lichtquellensteuerung angesteuert werden, basierend auf einem vorgegebenen Zeitansteuerungsablaufmuster. Das Zeitansteuerungsablaufmuster gibt zumindest einen ersten Aktivierungsstartzeitpunkt, eine erste Aktivierungszeitdauer der ersten Lichtquellenanordnung sowie einen zweiten Aktivierungsstartzeitpunkt und eine zweite Aktivierungszeitdauer der zweiten Lichtquellenanordnung und ein Wiederholungskriterium vor. Wenn die Lichtquellenanordnungen eingerichtet sind zum Generieren von ansteuerbar unterschiedlich farbigem Licht, dann gibt das Zeitansteuerungsablaufmuster zusätzlich oder alternativ einen Farbcode vor, der bestimmt, mit welcher Farbe eine zu aktivierende Lichtquellenanordnung aktiviert wird. Vorliegend gibt das Zeitansteuerungsablaufmuster zudem zumindest einen dritten Aktivierungsstartzeitpunkt und eine dritte Aktivierungszeitdauer der dritten Lichtquellenanordnung vor.

Beispielhaft können folgende Vorgaben definiert sein:

Lichtquellenanordnung 1: Aktivierungsstartzeitpunkt $t_1$, Aktivierungszeitdauer $T_1$
Lichtquellenanordnung 2: Aktivierungsstartzeitpunkt $t_2$, Aktivierungszeitdauer $T_2$
Lichtquellenanordnung 3: Aktivierungsstartzeitpunkt $t_3$, Aktivierungszeitdauer $T_3$
Wiederholungskriterium: Zeitdauer $T_4$

Zum Aktivierungsstartzeitpunkt $t_1$ wird die mindestens eine erste Lichtquellenanordnung aktiviert für die Aktivierungszeitdauer $T_1$ (z.B. $T_1 = t_4 - t_1$). Für einen Nutzer, der sich vor der dritten Seitenfläche 506 des ersten Sperrkörpers 502 befindet, ist für einen Zeitraum ($t_1$ bis $t_2$), in dem nur die erste Lichtquellenanordnung aktiviert ist, nur der erste Lichtauskoppelbereich 514 bzw. die erste Symbolform in Form eines Pfeils sichtbar. Zum Aktivierungsstartzeitpunkt $t_2$ wird die mindestens eine zweite Lichtquelle aktiviert für die Aktivierungszeitdauer $T_2$ (z.B. $T_2 = t_4 - t_2$). Für einen Nutzer, der sich vor der dritten Seitenfläche 506 des ersten Sperrkörpers 502 befindet, sind für den weiteren Zeitraum ($t_2$ bis $t_3$), in dem nur die erste Lichtquellenanordnung und die zweite Lichtquellenanordnung aktiviert sind, nur der erste Lichtauskoppelbereich 514 und der zweite Lichtauskoppelbereich 516 sichtbar, bzw. es ist eine zusammengesetzte Symbolform (Doppelpfeil) sichtbar, die aus der ersten Symbolform und der zweiten Symbolform gebildet ist. Zum Aktivierungsstartzeitpunkt $t_3$ wird die mindestens eine dritte Lichtquellenanordnung aktiviert für die Aktivierungszeitdauer $T_3$ (z.B. $T_3 = t_4 - t_3$). Für einen Nutzer, der sich vor der dritten Seitenfläche 506 des ersten Sperrkörpers 502 befindet, sind für den weiteren Zeitraum ($t_3$ bis $t_4$), in dem die erste Lichtquellenanordnung, die zweite Lichtquelle und die dritte Lichtquelle aktiviert sind, der erste Lichtauskoppelbereich 514, der zweite Lichtauskoppelbereich 516 und der dritte Lichtauskoppelbereich 560 sichtbar, bzw. es ist eine zusammengesetzte Symbolform (Dreifachpfeil) sichtbar, die aus der ersten Symbolform, der zweiten Symbolform und der dritten Symbolform gebildet ist.

Zum Zeitpunkt $t_4$ werden sämtliche Lichtquellenanordnungen deaktiviert. Insbesondere läuft die jeweilige Aktivierungszeitdauer $T_1$, $T_2$, $T_3$ zum Zeitpunkt $t_4$ ab. Die Zeitdauer $T_4$ kann insbesondere definieren, wann die jeweiligen Lichtquellenanordnungen wieder aktiviert werden, so dass die zuvor beschriebene Sequenz wiederholt wird (beginnend mit der Aktivierung der mindestens einen ersten Lichtquellenanordnung mit der Aktivierungszeitdauer $T_1$). Mit anderen Worten, durch das Zeitansteuerungsablaufmuster kann ein insbesondere wiederholendes Abspielen einer auf der dritten Seitenfläche des ersten Sperrkörpers sichtbaren Symbolfolge (insbesondere in Form des beschriebenen Lauflichts) definiert sein.

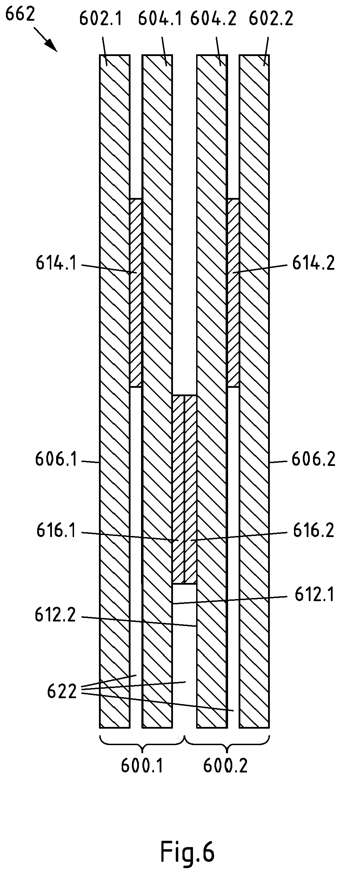

Die Figur 6 zeigt eine schematische (Schnitt-)Ansicht eines Ausführungsbeispiels eines Sperrkörperverbundsets 662 gemäß der vorliegenden Anmeldung. Das Sperrkörperverbundset 662 umfasst einen ersten Sperrkörperverbund 600.1 (z.B. entsprechend Figur 1) und mindestens einen zweiten Sperrkörperverbund 600.2 (z.B. ebenfalls entsprechend Figur 1). Eine zweite Seitenfläche 612.1 des ersten Sperrkörperverbunds 600.1, die eine Rückseite des ersten Sperrkörperverbunds 600.1 bildet, ist mit einer zweiten Seitenfläche 612.2 des zweiten Sperrkörperverbunds 600.2 verbunden, die eine Rückseite des zweiten Sperrkörperverbunds 600.2 bildet. Der erste Sperrkörperverbund 600.1 umfasst einen ersten Lichtauskoppelbereich 614.1 und einen zweiten Lichtauskoppelbereich 616.1. Der zweite Sperrkörperverbund 600.2 umfasst einen weiteren ersten Lichtauskoppelbereich 614.2 und einen weiteren zweiten Lichtauskoppelbereich 616.2. Zwischen der zweiten Seitenfläche 612.1 des ersten Sperrkörperverbunds 600.1 und der zweiten Seitenfläche 612.2 des zweiten Sperrkörperverbunds 600.2 ist eine zumindest teilweise optisch transparente Trennschicht 622 angeordnet. Insbesondere kann die optisch transparente Trennschicht 622 aus den zweiten Lichtauskoppelbereichen 614.1, 616.2 und aus einer Luftschicht gebildet sein. Das Sperrkörperverbundset 662 ermöglicht die beidseitige Darstellung von Informationen. Insbesondere kann auf bzw. an der Vorderseite des Sperrkörperverbundsets 662 eine andere Information (z.B. andere Farbe, anderes (zusammengesetztes) Symbol, anderes Lauflicht etc.) als auf bzw. an der Rückseite des Sperrkörperverbundsets 662 angezeigt werden.

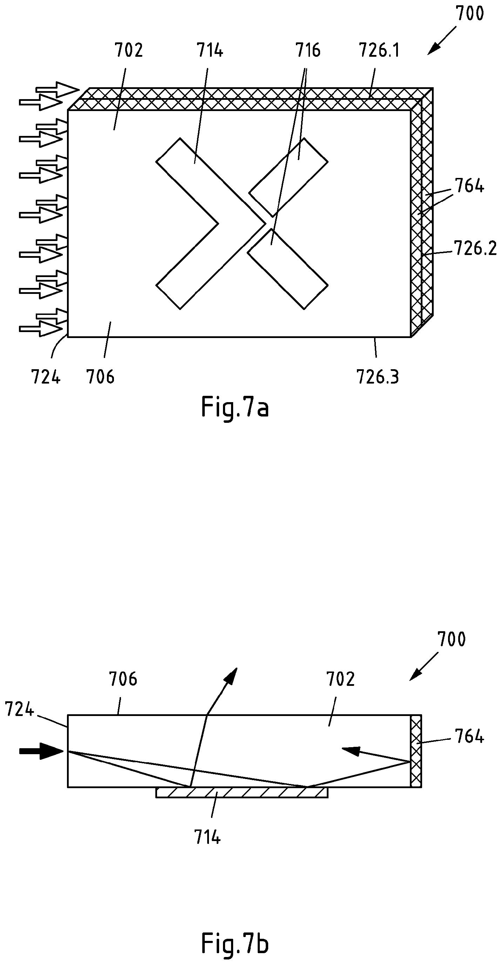

Die Figuren 7a und 7b zeigen schematische Ansichten eines weiteren Ausführungsbeispiels eines Sperrkörperverbunds 700 gemäß der vorliegenden Anmeldung. Zur Vermeidung von Wiederholungen werden nachfolgend im Wesentlichen die Unterschiede zu den vorherigen Ausführungsbeispielen beschrieben, und ansonsten wird auf die vorherigen Ausführungen verwiesen.

Der dargestellte Sperrkörperverbund 700 umfasst einen ersten Sperrkörper 702 mit einem ersten Lichtauskoppelbereich 714 und einen aus der Sicht eines Betrachters dahinterliegenden zweiten Sperrkörper (ohne Bezugszeichen) mit einem zweiten Lichtauskoppelbereich 716. An mindestens einer vierten Seitenfläche (insbesondere an den drei (vierten) Schmalseiten) des ersten Sperrkörpers 702 ist vorliegend eine Reflexionsschicht 764 und an mindestens einer vierten Seitenfläche (insbesondere an den drei Schmalseiten) des zweiten Sperrkörpers 704 ist eine Reflexionsschicht 764 angeordnet. Mit anderen Worten, an sämtlichen Schmalseiten 726.1, 726.2, 726.3 des Sperrkörperverbunds 700 ist eine Reflexionsschicht 764 angeordnet.

Wie insbesondere aus der Figur 7b (zur besseren Übersicht ist nur der erste Sperrkörper 702 dargestellt) zu erkennen ist, kann an der ersten Seitenfläche 724 eingekoppeltes Licht durch die Reflexionsschicht 764 reflektiert werden. Lichtverluste können reduziert werden.

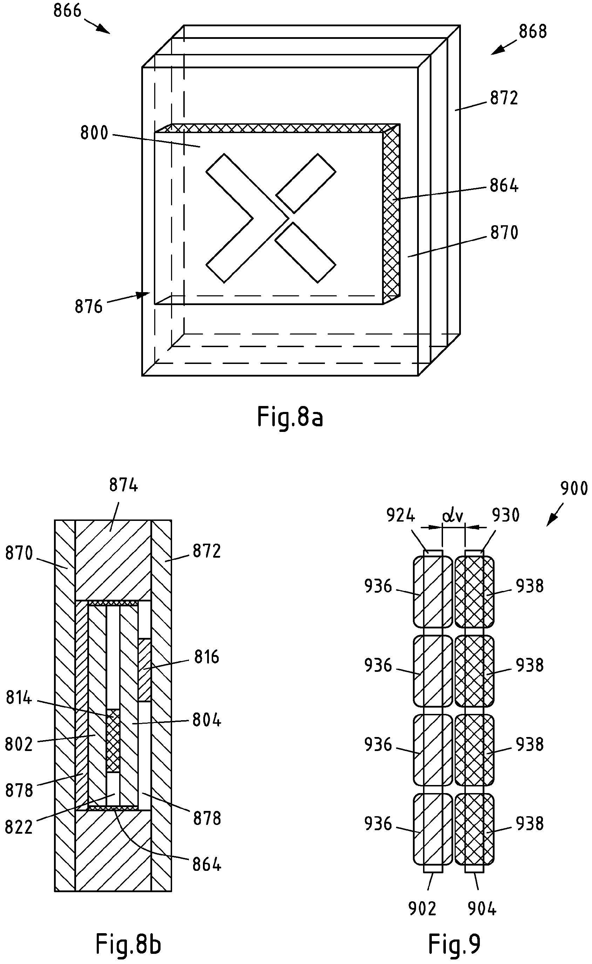

Die Figuren 8a und 8b zeigen schematische Ansichten eines weiteren Ausführungsbeispiels einer Sperrkörperanordnung 866 gemäß der vorliegenden Anmeldung. Zur Vermeidung von Wiederholungen werden nachfolgend im Wesentlichen die Unterschiede zu den vorherigen Ausführungsbeispielen beschrieben, und ansonsten wird auf die vorherigen Ausführungen verwiesen. Ferner wurde aus Gründen einer besseren Übersicht auf die Darstellung einer Lichtquellenvorrichtung verzichtet.

Die dargestellte Sperrkörperanordnung 866 umfasst vorliegend ein im Wesentlichen optisch transparentes Sperrkörperpaneel 868 mit einer zwischen einem ersten im Wesentlichen optisch transparenten Außenpaneel 870 und einem zweiten im Wesentlichen optisch transparenten Außenpaneel 872 liegenden Sperrkörperverbundausnehmung 876. In einem Randbereich des Sperrkörperpaneels 868 kann an mindestens den Schmalseiten des Sperrkörperpaneels 868 zwischen dem ersten Außenpaneel 870 und dem zweiten Außenpaneel 872 ein Abstandselement 874 angeordnet sein. Außenpaneele 870, 872 und Abstandselement können beispielsweise aus Acrylglas und/oder Polykarbonat gebildet sein und insbesondere mit einem (transparenten) Kleber miteinander verklebt sein. Wie zu erkennen ist, sind die Außenpaneele 870, 872 und das Abstandselement 874 insbesondere derart miteinander verbunden, dass die Sperrkörperverbundausnehmung 876 gebildet wird.

Eine Innenform der Sperrkörperverbundausnehmung 876 kann insbesondere zu einer Außenform des Sperrkörperverbunds 800 ((z.B. der Sperrkörperverbund nach Figur 7) und/oder des Sperrkörperverbundsets (z.B. nach Figur 6) korrespondieren, derart, dass der Sperrkörperverbund bzw. das Sperrkörperverbundset in die Sperrkörperverbundausnehmung (passgenau) (über die Öffnung in einer Schmalseite) einsetzbar ist. Mit anderen Worten, die Sperrkörperverbundausnehmung 876 bildet eine Tasche im Sperrkörperpaneel 868, in die ein Sperrkörperverbund 800 bzw. ein Sperrkörperverbundset (z.B. nach Figur 6) passgenau eingelassen werden kann. Vorzugsweise kann zwischen dem Sperrkörperverbund 800 und den Außenpaneelen 870, 872 jeweils eine weitere im Wesentlichen optisch transparente Trennschicht 878 vorgesehen sein. Zwischen Abstandselement 874 und Sperrkörperverbund 800 kann vorzugsweise die zuvor beschriebene Reflexionsschicht 864 angeordnet sein.

Die Figur 9 zeigt eine schematische Ansicht eines Beispiels zweier Sperrkörper (nur die jeweiligen ersten Seitenflächen 924, 930 sind zur besseren Übersicht dargestellt) eines Sperrkörperverbunds 900 mit einer Mehrzahl von Lichtquellen 936, 938 einer Lichtquellenvorrichtung.

Aus Sicherheitsgründen ist die kinetische Energie, mit der bei einer Durchgangssperre eine Sperrkörperanordnung bewegt (geöffnet und geschlossen) werden darf, begrenzt. Dies ergibt sich insbesondere aus Vorschriften, welche die Kräfte begrenzen, die auf einen menschlichen Körper bei einer (ungewollten) Kollision mit einer sich bewegenden Sperrkörperanordnung auftreten können. Damit ist die Geschwindigkeit, mit der eine Sperrkörperanordnung bewegt werden kann, abhängig von dem Massenträgheitsmoment der Sperrkörperanordnung bzw. hierdurch begrenzt. Das gesamte Massenträgheitsmoment und damit das Gesamtgewicht aus Sperrkörperpaneel und einem eingesetzten Sperrkörperverbund darf daher nicht signifikant zunehmen im Vergleich zu einer Sperrkörperanordnung des Stands der Technik. Bei einem Einsatz mehrerer Sperrkörper bzw. Scheiben in einem Sperrkörperverbund ist es daher bevorzugt, diese möglichst dünn auszubilden. Dies kann dazu führen, dass die gewünschte Sperrkörperdicke geringer ist als die notwendige Einbaubreite der jeweiligen Lichtquellenanordnungen (z.B. (mehrfarbige) LEDs bzw. Gruppen von Dioden mit jeweils unterschiedlicher Farbemission mit einer Breite und Länge zwischen ca. 3,5 mm und 5 mm). Der für eine individuelle Einkopplung notwendige Abstand $\alpha_V$ der Sperrkörper, der durch die genannte Trennschicht definiert ist, wäre unnötig groß. Dies ist beispielhaft in der Figur 9 dargestellt. Insbesondere würde dies erfordern, zusätzliche Bauteile zu verwenden, was das Gewicht erhöhen würde.

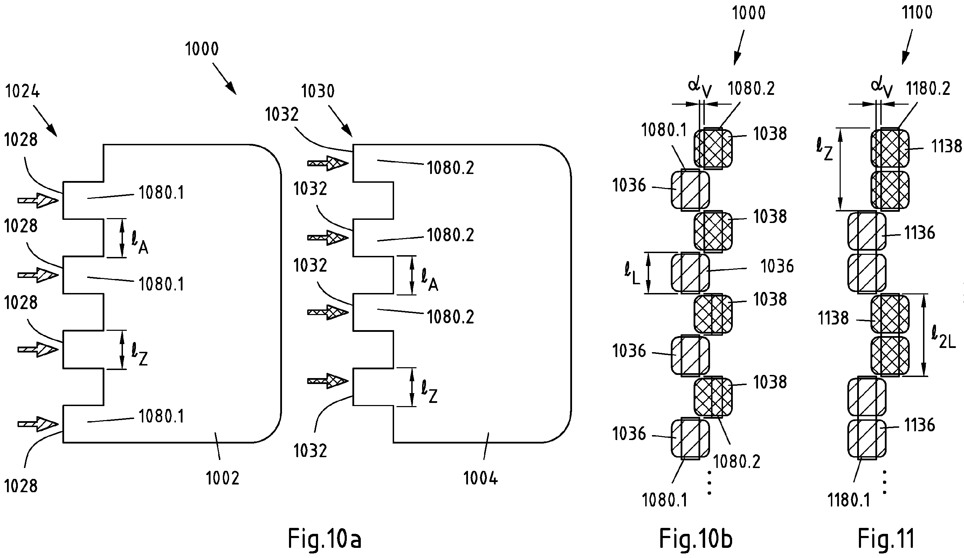

Die Lösung dieser Problematik gemäß einem bevorzugtem Ausführungsbeispiel ist in den Figuren 10a und 10b dargestellt. So zeigen die Figuren 10a und 10b schematische Ansichten eines weiteren Ausführungsbeispiels eines Sperrkörperverbunds 1000 gemäß der vorliegenden Anmeldung. Zur Vermeidung von Wiederholungen werden nachfolgend im Wesentlichen die Unterschiede zu den vorherigen Ausführungsbeispielen beschrieben, und ansonsten wird auf die vorherigen Ausführungen verwiesen. Ferner wurde aus Gründen einer besseren Übersicht auf die Darstellung einer Lichtquellenvorrichtung verzichtet.

Zur besseren Übersicht sind der erste Sperrkörper 1002 und der zweite Sperrkörper 1004 in der Figur 10a in einem unverbundenen Zustand dargestellt. Der erste Lichteinkoppelbereich 1028 der ersten Seitenfläche 1024 des ersten Sperrkörpers 1002 ist insbesondere durch eine erste Mehrzahl von ersten aus der ersten Seitenfläche 1024 hervorstehenden Zapfen 1080.1 gebildet. Insbesondere ist die erste Seitenfläche 1024 kammartig gebildet. Der zweite Lichteinkoppelbereich 1032 der ersten Seitenfläche 1030 des zweiten Sperrkörpers 1004 ist insbesondere durch eine zweite Mehrzahl von zweiten aus der ersten Seitenfläche 1030 hervorstehenden Zapfen 1080.2 gebildet. Vorzugsweise entspricht die Länge lz eines jeweiligen Zapfens 1080.1, 1080.2 im Wesentlichen der Länge $l_L$ einer Lichtquelle einer Lichtquellenanordnung 1036, 1038 (bzw. ist minimal größer). Ferner entspricht vorzugsweise die Länge $l_A$ einer jeweiligen Ausnehmung zwischen zwei benachbarten Zapfen 1080.1, 1080.2 im Wesentlichen der Länge $l_L$ einer Lichtquelle einer Lichtquellenanordnung 1036, 1038 (bzw. ist minimal größer). Die Längen $l_L$ und $l_A$ können im Wesentlichen gleich groß sein. Die Breite einer Lichtquelle einer Lichtquellenanordnung 1036, 1038 und/oder eines Zapfens 1080.1, 1080.2 und/oder einer Ausnehmung kann im Wesentlichen der Länge einer Lichtquelle einer Lichtquellenanordnung 1036, 1038 bzw. eines Zapfens 1080.1, 1080.2 bzw. einer Ausnehmung entsprechen.

In einem verbundenen Zustand des ersten Sperrkörpers 1002 und des zweiten Sperrkörpers 1004 können die ersten Zapfen 1080.1 versetzt zu den zweiten Zapfen 1080.2 angeordnet sein. Dies meint insbesondere, dass benachbart zu einem ersten Zapfen 1080.1 kein zweiter Zapfen 1080.1 (und auch kein weiterer erster Zapfen) angeordnet ist, sondern eine zwischen zwei benachbarten zweiten Zapfen 1080.1 angeordnete Ausnehmung. Bei einer kammartigen Anordnung der ersten Zapfen 1080.1 und bei einer kammartigen Anordnung der zweiten Zapfen 1080.2 kann der erste Kamm mit den ersten Zapfen 1080.1 bzw. Zinken derart versetzt zu dem zweiten Kamm mit den zweiten Zapfen 1080.2 bzw. Zinken angeordnet sein, dass ein jeweiliger erster Zapfen 1080.1 stets benachbart zu einer zweiten Ausnehmung des zweiten Kamms und ein jeweiliger zweiter Zapfen 1080.2 stets benachbart zu einer ersten Ausnehmung des ersten Kamms angeordnet ist. Im Beispiel der Figur 10 b weist jede Lichtquelle einer Lichtquellenanordnung 1036, 1038 eine größere Dicke auf als die Dicke eines Zapfens 1080.1, 1080.2. Die jeweiligen Lichtquellen einer Lichtquellenanordnung 1036, 1038 können sich über die jeweilige Ausnehmung zwischen zweier benachbarter Zapfen 1080.1, 1080.2 erstrecken. Die für die Sperrkörper 1002, 1004 vorgesehenen Lichtquellen 1036, 1038 können im Wechsel gesetzt sein.

Wie insbesondere aus der Figur 10b zu entnehmen ist, erlaubt eine entsprechende Dimensionierung der Zapfen 1080.1, 1080.2 und Ausnehmungen zwischen den entsprechenden Zapfen 1080.1, 1080.2, dass vorzugsweise ein Sperrkörperverbund 1000 mit Sperrkörpern mit Dicken im Bereich von 1 mm bis 3 mm und mit einem Abstand $\alpha_V$ zwischen den Sperrkörpern von 0,15 mm und 0,5 mm verwendet werden können.

Die Figur 11 zeigt eine schematische Ansicht eines weiteren Ausführungsbeispiels eines Sperrkörperverbunds 1100 gemäß der vorliegenden Anmeldung, insbesondere ein alternatives Ausführungsbeispiel zu der Figur 10a bzw. 10b. Zur Vermeidung von Wiederholungen werden nachfolgend im Wesentlichen die Unterschiede zu den vorherigen Ausführungsbeispielen beschrieben, und ansonsten wird auf die vorherigen Ausführungen verwiesen.

Im Unterschied zum Ausführungsbeispiel nach Figuren 10a und 10b entspricht die Länge lz eines Zapfens 1180.1, 1180.2 der Länge $l_{2L}$ zweier benachbarter Lichtquellen 1136, 1138. Dies vereinfacht insbesondere die Herstellung eines Sperrkörperverbunds 1100 noch weiter.

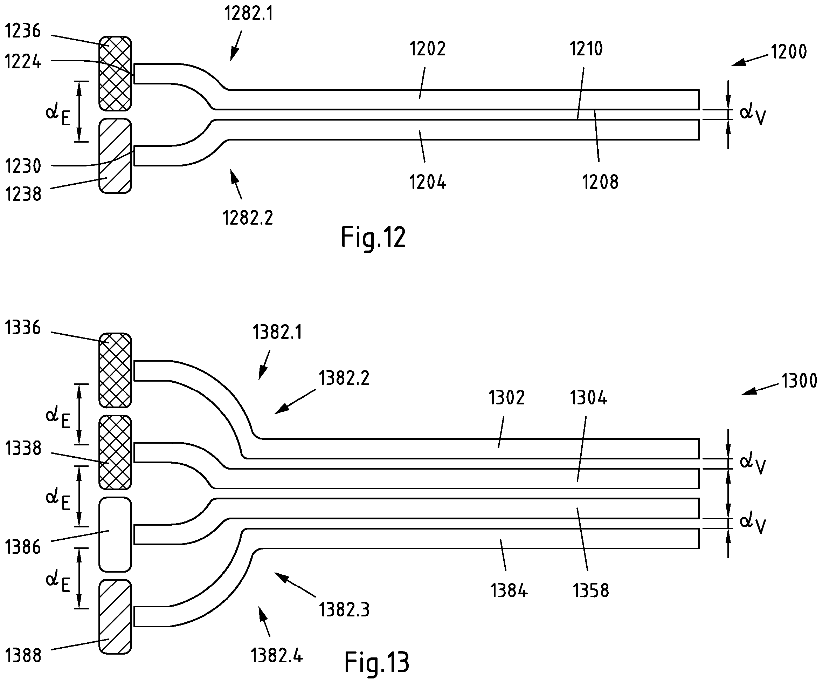

Die Figur 12 zeigt eine schematische Ansicht eines weiteren Ausführungsbeispiels eines Sperrkörperverbunds 1200 gemäß der vorliegenden Anmeldung, insbesondere ein alternatives Ausführungsbeispiel zu den Ausführungsbeispielen nach Figur 10a bzw. 10b und 11. Zur Vermeidung von Wiederholungen werden nachfolgend im Wesentlichen die Unterschiede zu den vorherigen Ausführungsbeispielen beschrieben, und ansonsten wird auf die vorherigen Ausführungen verwiesen.

Ein erster Endbereich 1282.1 des ersten Sperrkörpers 1202 mit der ersten Seitenfläche 1224 des ersten Sperrkörpers 1202 ist insbesondere gegenüber einem zweiten Endbereich 1282.2 des zweiten Sperrkörpers 1204 mit der zweiten Seitenfläche 1230 des zweiten Sperrkörpers 1204 derart verformt, dass der Abstand $\alpha_E$ zwischen dem ersten Endbereich 1282.1 und dem zweiten Endbereich 1282.2 größer ist als der Abstand $\alpha_V$ zwischen der zweiten Seitenfläche 1208 des ersten Sperrkörpers 1202 und der dritten Seitenfläche 1210 des zweiten Sperrkörpers 1204 in einem verbundenen Bereich der genannte Sperrkörper 1202, 1204. Indem der Abstand $\alpha_E$ zwischen dem ersten Endbereich 1282.1 und dem zweiten Endbereich 1282.2 durch eine Verformung (beispielsweise Verbiegung) vergrößert wird (verglichen zu den verbundenen Bereichen, insbesondere umfassend den mindestens einen Lichtauskoppelbereich), kann bei einem Sperrkörperverbund 1200 mit Sperrkörpern mit einer geringen Dicke (z.B. zwischen 1 mm und 3 mm) und einem geringen Abstand $\alpha_V$ (0,15 mm und 0,5 mm) sichergestellt werden, dass durch die mindestens eine erste Lichtquelle einer ersten Lichtquellenanordnung 1236 nur Licht in den ersten Sperrkörper 1202 und durch die mindestens eine zweite Lichtquelle einer zweiten Lichtquellenanordnung 1238 nur Licht in den zweiten Sperrköper 1204 eingekoppelt werden kann.

Die Figur 13 zeigt eine schematische Ansicht eines weiteren Ausführungsbeispiels eines Sperrkörperverbunds 1300 gemäß der vorliegenden Anmeldung Zur Vermeidung von Wiederholungen werden nachfolgend im Wesentlichen die Unterschiede zu den vorherigen Ausführungsbeispielen (insbesondere zur Figur 12) beschrieben, und ansonsten wird auf die vorherigen Ausführungen verwiesen.

Im Unterschied zum Ausführungsbeispiel nach Figur 13 umfasst der Sperrkörperverbund 1300 einen ersten Sperrkörper 1302 mit einem ersten Endbereich 1382.1, einen zweiten Sperrkörper 1304 mit einem zweiten Endbereich 1382.2, einen dritten Sperrkörper 1358 mit einem dritten Endbereich 1382.3 und einen vierten Sperrkörper 1384 mit einem vierten Endbereich 1382.4. Der jeweilige Abstand $\alpha_E$ zwischen den jeweiligen Endbereichen 1382.1 bis 1382.4 ist durch die Verformung dieser Endbereiche 1382.1 bis 1382.4 größer als der jeweilige Abstand $\alpha_V$ zwischen den jeweiligen Sperrkörper 1302, 1304, 1358, 1384 in dem jeweiligen verbundenen Bereich der Sperrkörper 1302, 1304, 1358, 1384 ist. Licht kann durch die jeweiligen Lichtquellen 1336, 1338, 1386 und 1388 in den jeweiligen Sperrkörper 1302, 1304, 1358, 1384 eingekoppelt werden.

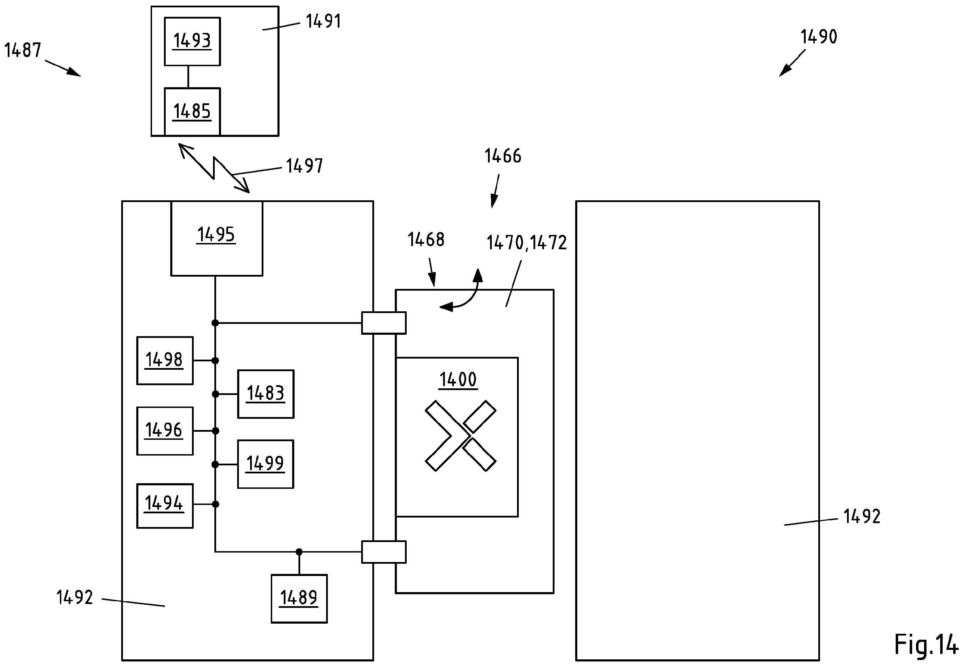

Die Figur 14 zeigt eine schematische Ansicht eines Ausführungsbeispiels eines Zugangskontrollsystems 1490 gemäß der vorliegenden Anmeldung mit einem Ausführungsbeispiel einer Durchgangssperre 1487 gemäß der vorliegenden Anmeldung. Die Durchgangssperre 1487 weist vorliegend eine Sperrkörperanordnung 1466 auf, die beispielsweise gemäß dem Ausführungsbeispiel nach Figuren 8a und 8b gebildet sein kann. So kann die Sperrkörperanordnung 1466 beispielsweise ein Sperrkörperpaneel 1468 mit einem ersten Außenpaneel 1470 und einem zweiten Außenpaneel 1472 sowie einem eingesetzten Sperrkörperverbund 1400 umfassen. Zu Gunsten einer besseren Übersicht wurde auf eine Darstellung der Details (z.B. der Lichtquellenvorrichtung) der Sperrkörperanordnung 1466 in der Figur 14 verzichtet. Bei Varianten der Anmeldung kann auch ein Sperrkörperverbundset eingesetzt sein.

Das Zugangskontrollsystem 1490 umfasst vorliegend ein Backendsystem 1491 und mindestens eine Durchgangssperre 1487. Insbesondere kann eine Mehrzahl von Durchgangssperren 1487 vorgesehen sein, beispielsweise mindestens ein Durchgangssperrenarray (auch Gate Array genannt) mit einer Mehrzahl von Durchgangssperren.

Die Durchgangssperre 1487 umfasst neben der Sperrkörperanordnung 1466 eine Basis 1492. Die Basis 1492 ist vorliegend durch zwei Basiskörper bzw. Standkörper gebildet. Die Sperrkörperanordnung 1466 ist beweglich an der Basis 1492 befestigt. Durch mindestens einen Aktor 1499 (beispielsweise ein Elektromotor) kann die Sperrkörperanordnung 1466 zwischen einer geschlossenen Position (wie in der Figur 14 dargestellt) und einer geöffneten Position bewegt werden bzw. verfahren werden. Dies ist durch den Pfeil angedeutet.

Der Aktor 1499 ist insbesondere in der Basis 1492 integriert. In dem vorliegenden Ausführungsbeispiel sind in der Basis 1492 ferner ein Detektionsmodul 1494, eine Lichtquellensteuerung 1496, eine Freigabeeinrichtung 1498, ein Kommunikationsmodul 1495, ein Datenspeicher 1483 und eine Schnittstelleneinrichtung 1489 intergiert. Es versteht sich, dass bei anderen Varianten der Anmeldung auch weniger Elemente oder weitere Elemente vorgesehen sein können, wie eine weitere Schnittstelleneinrichtung (die auf einer anderen Übertragungstechnologie basiert).

Das Kommunikationsmodul 1495 ist insbesondere eingerichtet zum Kommunizieren mit einem Kommunikationsmodul 1485 des Backendsystems 1491 über ein (drahtloses und/oder drahtgebundenes) Fernkommunikationsnetz 1497.

Die mindestens eine Schnittstelleneinrichtung 1489 (z.B. ein Barcodescanner, eine Bluetooth-Schnittstelle, NFC-Schnittstelle, ein Magnetstreifenleser etc.) ist insbesondere eingerichtet zum Empfangen einer Zugangsberechtigung (Ticketcode, Nutzerkennung etc.) des Nutzers von einem (vorbeschrieben und nicht dargestellten) Zugangsmedium des Nutzers. Insbesondere erlaubt eine gültige Zugangskennung ein Passieren der Durchgangssperre 1487.

Bei Erhalt bzw. Empfang einer Zugangsberechtigung durch die Schnittstelleneinrichtung 1489 kann diese durch das Kommunikationsmodul 1495 an das Backendsystem 1491 weitergeleitet werden. Ein Auswertemodul 1493 des Backendsystems 1491 kann die weitergeleitete Zugangsberechtigung (in herkömmlicher Weise) überprüfen, beispielsweise durch einen Vergleich mit gespeicherten zulässigen Zugriffskennungen. Bei anderen Varianten kann ein Auswertemodul auch in der Durchgangssperre integriert sein.

Das Überprüfungsergebnis kann durch das Kommunikationsmodul 1485 an die Durchgangssperre 1487 übertragen werden. Wenn beispielsweise festgestellt wird, dass die weitergeleitete Zugangsberechtigung identisch ist zu einer gespeicherten zulässigen Zugriffskennung und die weitergeleitete Zugangsberechtigung somit eine gültige Zugangsberechtigung ist, kann ein entsprechend positives Überprüfungsergebnis übertragen werden. Wenn beispielsweise festgestellt wird, dass die weitergeleitete Zugangsberechtigung nicht identisch ist mit einer gespeicherten zulässigen Zugriffskennung und die weitergeleitete Zugangsberechtigung somit eine ungültige Zugangsberechtigung ist, kann ein entsprechend negatives Überprüfungsergebnis übertragen werden.

Das Überprüfungsergebnis kann der Freigabeeinrichtung 1498 bereitgestellt werden. Beispielsweise kann bei einem positiven Überprüfungsergebnis ein Freigabesignal übertragen werden. Basierend auf dem Überprüfungsergebnis kann die Freigabeeinrichtung 1498 den Aktor 1499 ansteuern. Beispielsweise kann der Aktor 1499 angesteuert werden, um ein Bewegen der Sperrkörperanordnung 1466 von der geschlossenen Position in die geöffnete Position zu bewirken (bei einem positiven Überprüfungsergebnis).

Das Detektionsmodul 1494 kann eingerichtet sein zum Detektieren des augenblicklichen Betriebszustands der Durchgangssperre 1487, wie insbesondere zuvor beschrieben wurde. Vorzugsweise kann dem Detektionsmodul 1494 zumindest ein positives Überprüfungsergebnis und/oder ein Zustandssteuersignal bereitgestellt werden.

Der detektierte Betriebszustand kann der Lichtquellensteuerung 1496 bereitgestellt werden. In dem Datenspeicher 1483 kann mindestens vorgegebenes Zeitansteuerungsablaufmuster gespeichert sein, insbesondere eine Mehrzahl von vorgegebenen Zeitansteuerungsablaufmustern. Jedem Betriebszustand kann ein vorgegebenes Zeitansteuerungsablaufmuster zugeordnet sein. Beispielsweise kann eine entsprechende Zuordnungstabelle gespeichert sein.

Basierend auf dem detektierten Betriebszustand und insbesondere der Zuordnungstabelle, in jedem Betriebszustand ein Zeitansteuerungsablaufmuster zugeordnet sein kann, kann die Lichtquellensteuerung 1496 ein Zeitansteuerungsablaufmuster bestimmen bzw. auswählen und die Lichtquellen der Lichtquellenvorrichtung der Sperrkörperanordnung 1466 ansteuern, wie insbesondere zuvor beschrieben wurde.

In einer anderen Ausführungsform, insbesondere mit einem Sperrkörperverbundset, kann die Lichtquellensteuerung 1496 dazu konfiguriert sein, abhängig von einem Betriebszustand der Durchgangssperre 1487 die beiden Vorderseiten des Sperrkörperverbundsets unterschiedlich farbig zu beleuchten (beispielsweise rot und grün), so dass ein Nutzer bereits bei Annäherung an die Durchgangssperre 1487 anhand der Farbe der Lichtauskoppelfläche erkennen kann, ob die Durchgangssperre 1487 in der gewünschten Durchgangsrichtung benutzbar ist oder nicht. Insbesondere kann ein Lauflicht (wie z.B. in Figur 5 dargestellt) angezeigt werden.

Es versteht sich, dass eine Durchgangssperre 1487 eines anmeldungsgemäßen Zugangskontrollsystems 1490 auch mit zwei Sperrkörpern bzw. Sperrkörperpaneelen 1468 ausgeführt sein kann, von denen je einer an dem rechten Teil der Basis 1942 und einer an dem linken Teil der Basis 1942 bewegbar befestigt sein kann. Es versteht sich ferner, dass dabei wenigstens ein Sperrkörper bzw. Sperrkörperpaneel 1468 mit einem anmeldungsgemäßen Sperrkörperverbund 1400 oder einem anmeldungsgemäßen Sperrkörperverbundset versehen werden kann.

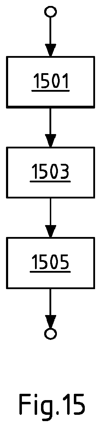

Die Figur 15 zeigt ein Diagramm eines Ausführungsbeispiels eines Verfahrens gemäß der vorliegenden Anmeldung. Das Verfahren dient zum Betreiben einer Durchgangssperre, wie beispielsweise die in Figur 14 dargestellte Durchgangssperre.

In einem ersten optionalen Schritt 1501 erfolgt insbesondere ein Detektieren eines Betriebszustands der Durchgangssperre, wie beschrieben wurde.

In einem nächsten Schritt 1503 erfolgt insbesondere ein Auswählen eines Zeitansteuerungsablaufmusters aus zumindest einem ersten Zeitansteuerungsablaufmuster und einem sich von dem ersten Zeitansteuerungsablaufmuster unterscheidenden zweiten Zeitansteuerungsablaufmuster, beispielsweise basierend auf dem detektierten Betriebszustand.

In einem Schritt 1505 erfolgt, durch die Lichtquellenvorrichtung, ein Ansteuern der Lichtquellenvorrichtung, insbesondere entsprechend dem ausgewählten bzw. bestimmten Zeitansteuerungsablaufmuster.

Bezugszeichenliste

| 100 | Sperrkörperverbund |
|-----|---------------------|
| 102 | erster Sperrkörper |
| 104 | zweiter Sperrkörper |
| 106 | dritte Seitenfläche |
| 108 | zweite Seitenfläche |
| 110 | dritte Seitenfläche |
| 112 | zweite Seitenfläche |
| 114 | erster Lichtauskoppelbereich |
| 116 | zweiter Lichtauskoppelbereich |
| 118 | Sichtfläche |
| 122 | Trennschicht |
| 124 | erste Seitenfläche |
| 126 | Schmalseite |
| 128 | erster Lichteinkoppelbereich |
| 130 | erste Seitenfläche |
| 132 | zweiter Lichteinkoppelbereich |
| 200 | Sperrkörperverbund |
| 202 | erster Sperrkörper |
| 204 | zweiter Sperrkörper |
| 206 | dritte Seitenfläche |
| 208 | zweite Seitenfläche |
| 210 | dritte Seitenfläche |
| 212 | zweite Seitenfläche |
| 214 | erster Lichtauskoppelbereich |
| 216 | zweiter Lichtauskoppelbereich |
| 218 | Sichtfläche |
| 222 | Trennschicht |
| 224 | erste Seitenfläche |
| 228 | erster Lichteinkoppelbereich |
| 230 | erste Seitenfläche |
| 232 | zweiter Lichteinkoppelbereich |
| 234 | Lichtquellenvorrichtung |
| 236 | erste Lichtquellenanordnung |
| 238 | zweite Lichtquellenanordnung |
| 240 | Kapselung |
| 242 | Licht |
| 244 | Licht |
| 246 | Quellentrennschicht |
| 248 | Zwischenraum |
| 250 | Teilkapselung |
| 252 | Teilkapselung |
| 254 | Abdeckschicht |
| 256 | aufgerauter Oberflächenbereich |
| 266 | Sperrkörperanordnung |
| 300 | Sperrkörperverbund |
| 302 | erster Sperrkörper |
| 304 | zweiter Sperrkörper |
| 322 | Trennschicht |
| 400 | Sperrkörperverbund |
| 402 | erster Sperrkörper |
| 404 | zweiter Sperrkörper |
| 406 | dritte Seitenfläche |
| 410 | dritte Seitenfläche |
| 414 | erster Lichtauskoppelbereich |

| | |
|---|---|
| 416 | erster Lichtauskoppelbereich |
| 424 | erste Seitenfläche |
| 430 | erste Seitenfläche |
| 500 | Sperrkörperverbund |
| 502 | erster Sperrkörper |
| 504 | zweiter Sperrkörper |
| 506 | dritte Seitenfläche |
| 514 | erster Lichtauskoppelbereich |
| 516 | zweiter Lichtauskoppelbereich |
| 558 | dritter Sperrkörper |
| 560 | dritter Lichtauskoppelbereich |
| 600 | Sperrkörperverbunde |
| 602 | erste Sperrkörper |
| 604 | zweite Sperrkörper |
| 606 | dritte Seitenflächen |
| 612 | zweite Seitenflächen |
| 614 | erste Lichtauskoppelbereiche |
| 616 | zweite Lichtauskoppelbereiche |
| 622 | Trennschichten |
| 662 | Sperrkörperverbundset |
| 700 | Sperrkörperverbund |
| 702 | erster Sperrkörper |
| 714 | erster Lichtauskoppelbereich |
| 716 | zweiter Lichtauskoppelbereich |
| 724 | erste Seitenfläche |
| 726 | Schmalseite |
| 764 | Reflexionsschicht |
| 800 | Sperrkörperverbund |
| 802 | erster Sperrkörper |
| 804 | zweiter Sperrkörper |
| 814 | erster Lichtauskoppelbereich |
| 816 | zweiter Lichtauskoppelbereich |
| 864 | Reflexionsschicht |
| 866 | Sperrkörperanordnung |
| 868 | Sperrkörperpaneel |
| 870 | erstes Außenpaneel |
| 872 | zweites Außenpaneel |
| 874 | Abstandselement |
| 876 | Sperrkörperverbundausnehmung |
| 878 | Trennschicht |
| 900 | Sperrkörperverbund |
| 924 | erste Seitenfläche |
| 930 | erste Seitenfläche |
| 936 | erste Lichtquellen |
| 938 | zweite Lichtquellen |
| 1000 | Sperrkörperverbund |
| 1002 | erster Sperrkörper |
| 1004 | zweiter Sperrkörper |
| 1024 | erste Seitenfläche |
| 1028 | erster Lichteinkoppelbereich |
| 1030 | erste Seitenfläche |
| 1032 | zweite Lichteinkoppelbereich |
| 1036 | erste Lichtquellenanordnung |
| 1038 | zweite Lichtquellenanordnung |
| 1080 | erste und zweite Zapfen |
| 1100 | Sperrkörperverbund |
| 1136 | erste Lichtquellenanordnung |
| 1138 | zweite Lichtquellenanordnung |

| | |
|---|---|
| 1180 | erste und zweite Zapfen |
| 1200 | Sperrkörperverbund |
| 1202 | erster Sperrkörper |
| 1204 | zweiter Sperrköper |
| 1208 | zweite Seitenfläche |
| 1210 | dritte Seitenfläche |
| 1224 | erste Seitenfläche |
| 1230 | erste Seitenfläche |
| 1236 | erste Lichtquellenanordnung |
| 1238 | zweite Lichtquellenanordnung |
| 1282 | Endbereich |
| 1300 | Sperrkörperverbund |
| 1302 | erster Sperrkörper |
| 1304 | zweiter Sperrkörper |
| 1336 | erste Lichtquellenanordnung |
| 1358 | dritter Sperrkörper |
| 1382 | Endbereich |
| 1384 | vierter Sperrkörper |
| 1400 | Sperrkörperverbund |
| 1466 | Sperrkörperanordnung |
| 1468 | Sperrkörperpaneel |
| 1470 | erstes Außenpaneel |
| 1472 | zweites Außenpaneel |
| 1483 | Datenspeicher |
| 1485 | Kommunikationsmodul |
| 1487 | Durchgangssperre |
| 1489 | Schnittstelleneinrichtung |
| 1490 | Zugangskontrollsystem |
| 1491 | Backendsystem |
| 1492 | Basis |
| 1493 | Auswertemodul |
| 1494 | Detektionsmodul |
| 1495 | Kommunikationsmodul |
| 1496 | Lichtquellensteuerung |
| 1497 | Fernkommunikationsnetz |
| 1498 | Freigabeeinrichtung |
| 1499 | Aktor |

**Patentansprüche**

1. Sperrkörperverbund (100, 200, 300, 400, 500, 600, 700, 800, 900, 1000, 1100, 1200, 1300, 1400) für eine Sperrkörperanordnung (266, 866, 1466) einer Durchgangssperre (1487) eines Zugangskontrollsystems (1490), umfassend:

   - mindestens einen ersten im Wesentlichen optisch transparenten Sperrkörper (102, 202, 302, 402, 502, 602, 702, 802, 1002, 1202, 1302) mit einer ersten einen ersten Lichteinkoppelbereich (128, 228, 1028) aufweisenden Seitenfläche (124, 224, 424, 1024, 1224), einer zweiten mindestens einen ersten Lichtauskoppelbereich (114, 214, 414, 514, 614, 714, 814) aufweisenden Seitenfläche (108, 208) und einer dritten eine erste Sichtfläche (118, 218) bildenden und der zweiten Seitenfläche (108, 208) gegenüberliegenden Seitenfläche (106, 206, 406, 506, 706),

- mindestens einen zweiten im Wesentlichen optisch transparenten Sperrkörper (104, 204, 304, 404, 504, 604, 704, 804, 1004, 1204, 1304) mit einer ersten einen zweiten Lichteinkoppelbereich (132, 232, 1032) aufweisenden Seitenfläche (130, 230, 430, 1030, 1230), einer zweiten mindestens einen zweiten Lichtauskoppelbereich (116, 216, 416, 516, 616, 716, 816) aufweisenden Seitenfläche (112, 212) und einer dritten der zweiten Seitenfläche (112, 212) gegenüberliegenden Seitenfläche (110, 210),

- wobei die dritte Seitenfläche (110, 210) des zweiten Sperrkörpers (104, 204, 304, 404, 504, 604, 704, 804, 1004, 1204, 1304) mit der zweiten Seitenfläche (108, 208) des ersten Sperrkörpers (102, 202, 302, 402, 502, 602, 702, 802, 1002, 1202, 1302) verbunden ist,

- wobei zwischen der dritten Seitenfläche (110, 210) des zweiten Sperrkörpers (104, 204, 304, 404, 504, 604, 704, 804, 1004, 1204, 1304) und der zweiten Seitenfläche (108, 208) des ersten Sperrkörpers (102, 202, 302, 402, 502, 602, 702, 802, 1002, 1202, 1302) eine zumindest teilweise im Wesentlichen optische transparente Trennschicht (122, 222, 322, 622) angeordnet ist, und

- wobei durch den ersten Lichtauskoppelbereich (114, 214, 414, 514, 614, 714, 814) und den zweiten Lichtauskoppelbereich (116, 216, 416, 516, 616, 716, 816) ausgekoppeltes Licht an der dritten Seitenfläche (106, 206, 406, 506, 706) des ersten Sperrkörpers (102, 202, 302, 402, 502, 602, 702, 802, 1002, 1202, 1302) sichtbar ist.

2. Sperrkörperverbund (100, 200, 300, 400, 500, 600, 700, 800, 900, 1000, 1100, 1200, 1300, 1400) nach Anspruch 1, **dadurch gekennzeichnet, dass**

    - der erste Lichtauskoppelbereich (114, 214, 414, 514, 614, 714, 814) gebildet ist durch einen aufgerauten Oberflächenbereich (256) und durch eine über dem aufgerauten Oberflächenbereich (256) angeordnete optisch intransparente Abdeckschicht (254), und/oder
    - der zweite Lichtauskoppelbereich (116, 216, 416, 516, 616, 716, 816) gebildet ist durch einen aufgerauten Oberflächenbereich (256) und durch eine über dem aufgerauten Oberflächenbereich (256) angeordnete optisch intransparente Abdeckschicht (254).

3. Sperrkörperverbund (100, 200, 300, 400, 500, 600, 700, 800, 900, 1000, 1100, 1200, 1300, 1400) nach Anspruch 1 oder 2, **dadurch gekennzeichnet, dass**

    - der erste Lichtauskoppelbereich (114, 214, 414, 514, 614, 714, 814) versetzt zu dem zweiten Lichtauskoppelbereich (116, 216, 416, 516, 616, 716, 816) angeordnet ist, derart, dass beim Einkoppeln von Licht in den ersten Lichteinkoppelbereich (128, 228, 1028) das durch den ersten Lichtauskoppelbereich (114, 214, 414, 514, 614, 714, 814) ausgekoppelte Licht an der dritten Seitenfläche (106, 206, 406, 506, 706) des ersten Sperrkörpers (102, 202, 302, 402, 502, 602, 702, 802, 1002, 1202, 1302) sichtbar ist und dass beim Einkoppeln von Licht in den zweiten Lichteinkoppelbereich (132, 232, 1032) das durch den zweiten Lichtauskoppelbereich (116, 216, 416, 516, 616, 716, 816) ausgekoppelte Licht an der dritten Seitenfläche (106, 206, 406, 506, 706) des ersten Sperrkörpers (102, 202, 302, 402, 502, 602, 702, 802, 1002, 1202, 1302) sichtbar ist.

4. Sperrkörperverbund (100, 200, 300, 400, 500, 600, 700, 800, 900, 1000, 1100, 1200, 1300, 1400) nach Anspruch 3, **dadurch gekennzeichnet, dass**

    - der erste Lichtauskoppelbereich (114, 214, 414, 514, 614, 714, 814) eine erste Symbolform bildet,
    - der zweite Lichtauskoppelbereich (116, 216, 416, 516, 616, 716, 816) eine Teilsymbolform oder eine zweite Symbolform bildet, und
    - der erste Lichtauskoppelbereich (114, 214, 414, 514, 614, 714, 814) und der zweite Lichtauskoppelbereich (116, 216, 416, 516, 616, 716, 816) zusammen eine aus der ersten Symbolform und der Teilsymbolform oder der zweiten Symbolform zusammengesetzte Symbolform bilden.

5. Sperrkörperverbund (100, 200, 300, 400, 500, 600, 700, 800, 900, 1000, 1100, 1200, 1300, 1400) nach einem der vorherigen Ansprüche, **dadurch gekennzeichnet, dass**

    - an mindestens einer vierten Seitenfläche des ersten Sperrkörpers (102, 202, 302, 402, 502, 602, 702, 802, 1002, 1202, 1302) eine Reflexionsschicht (764, 864) angeordnet ist, und/oder
    - an mindestens einer vierten Seitenfläche des zweiten Sperrkörpers (104, 204, 304, 404, 504, 604, 704, 804, 1004, 1204, 1304) eine Reflexionsschicht (764, 864) angeordnet ist.

6. Sperrkörperverbund (100, 200, 300, 400, 500, 600, 700, 800, 900, 1000, 1100, 1200, 1300, 1400) nach einem der vorherigen Ansprüche, **dadurch gekennzeichnet, dass**

- der erste Lichteinkoppelbereich (128, 228, 1028) der ersten Seitenfläche (124, 224, 424, 1024, 1224) des ersten Sperrkörpers (102, 202, 302, 402, 502, 602, 702, 802, 1002, 1202, 1302) durch eine erste Mehrzahl von ersten aus der ersten Seitenfläche (124, 224, 424, 1024, 1224) hervorstehenden Zapfen (1080.1, 1180.1) gebildet ist, und

- der zweite Lichteinkoppelbereich (132, 232, 1032) der ersten Seitenfläche (130, 230, 430, 1030, 1230) des zweiten Sperrkörpers (104, 204, 304, 404, 504, 604, 704, 804, 1004, 1204, 1304) durch eine zweite Mehrzahl von zweiten aus der ersten Seitenfläche (130, 230, 430, 1030, 1230) hervorstehenden Zapfen (1080.2, 1180.2) gebildet ist,

- insbesondere in einem verbundenen Zustand des ersten Sperrkörpers (102, 202, 302, 402, 502, 602, 702, 802, 1002, 1202, 1302) und des zweiten Sperrkörpers (104, 204, 304, 404, 504, 604, 704, 804, 1004, 1204, 1304) die ersten Zapfen (1080.1 1180.1) versetzt zu den zweiten Zapfen (1080.2, 1180.2) angeordnet sind.

7. Sperrkörperverbund (100, 200, 300, 400, 500, 600, 700, 800, 900, 1000, 1100, 1200, 1300, 1400) nach einem der vorherigen Ansprüche 1 bis 6, **dadurch gekennzeichnet, dass**

- ein erster Endbereich (1282.1, 1382.1) des ersten Sperrkörpers (102, 202, 302, 402, 502, 602, 702, 802, 1002, 1202, 1302) mit der ersten Seitenfläche (124, 224, 424, 1024, 1224) des ersten Sperrkörpers (102, 202, 302, 402, 502, 602, 702, 802, 1002, 1202, 1302) gegenüber einem zweiten Endbereich (1282.2, 1382.2) des zweiten Sperrkörpers (104, 204, 304, 404, 504, 604, 704, 804, 1004, 1204, 1304) mit der zweiten Seitenfläche (130, 230, 430, 1030, 1230) des zweiten Sperrkörpers (104, 204, 304, 404, 504, 604, 704, 804, 1004, 1204, 1304) derart verformt ist, dass der Abstand zwischen dem ersten Endbereich (1282.1, 1382.1) und dem zweiten Endbereich (1282.2, 1382.2) größer ist als der Abstand zwischen der zweiten Seitenfläche (108, 208) des ersten Sperrkörpers (102, 202, 302, 402, 502, 602, 702, 802, 1002, 1202, 1302) und der dritten Seitenfläche (110, 210) des zweiten Sperrkörpers (104, 204, 304, 404, 504, 604, 704, 804, 1004, 1204, 1304).

8. Sperrkörperverbundset (662), umfassend:

- einen ersten Sperrkörperverbund (100, 200, 300, 400, 500, 600, 700, 800, 900, 1000, 1100, 1200, 1300, 1400) nach einem der vorherigen Ansprüche, und

- mindestens einen zweiten Sperrkörperverbund (100, 200, 300, 400, 500, 600, 700, 800, 900, 1000, 1100, 1200, 1300, 1400) nach einem der vorherigen Ansprüche,

- wobei eine zweite Seitenfläche des ersten Sperrkörperverbunds (100, 200, 300, 400, 500, 600, 700, 800, 900, 1000, 1100, 1200, 1300, 1400), die eine Rückseite des ersten Sperrkörperverbunds (100, 200, 300, 400, 500, 600, 700, 800, 900, 1000, 1100, 1200, 1300, 1400) bildet, mit einer zweiten Seitenfläche des zweiten Sperrkörperverbunds (100, 200, 300, 400, 500, 600, 700, 800, 900, 1000, 1100, 1200, 1300, 1400), die eine Rückseite des zweite Sperrkörperverbunds (100, 200, 300, 400, 500, 600, 700, 800, 900, 1000, 1100, 1200, 1300, 1400) bildet, verbunden ist, und

- wobei zwischen der zweiten Seitenfläche des ersten Sperrkörperverbunds (100, 200, 300, 400, 500, 600, 700, 800, 900, 1000, 1100, 1200, 1300, 1400) und der zweiten Seitenfläche des zweiten Sperrkörperverbunds (100, 200, 300, 400, 500, 600, 700, 800, 900, 1000, 1100, 1200, 1300, 1400) eine zumindest teilweise im Wesentlichen optisch transparente Trennschicht (622) angeordnet ist.

9. Sperrkörperanordnung (266, 866, 1466) einer Durchgangssperre (1487) eines Zugangskontrollsystems (1490), umfassend:

- mindestens einen Sperrkörperverbund (100, 200, 300, 400, 500, 600, 700, 800, 900, 1000, 1100, 1200, 1300, 1400) nach einem der vorherigen Ansprüche 1 bis 7 und/oder ein Sperrkörperverbundset (662) nach Anspruch 8, und

- mindestens eine Lichtquellenvorrichtung (234) mit mindestens einer ersten Lichtquellenanordnung (236, 936, 1036, 1136, 1236, 1336), eingerichtet zum Einkoppeln von Licht in den ersten Lichteinkoppelbereich (128, 228, 1028), und mindestens einer zweiten Lichtquellenanordnung (238, 938, 1038, 1138, 1238, 1338), eingerichtet zum Einkoppeln von Licht in den zweiten Lichteinkoppelbereich (132, 232, 1032).

10. Sperrkörperanordnung (266, 866, 1466) nach Anspruch 9, **dadurch gekennzeichnet, dass**

- die Sperrkörperanordnung (266, 866, 1466) ein im Wesentlichen transparentes Sperrkörperpaneel (868, 1468) mit einer zwischen einem ersten Außenpaneel (870, 1470) und einem zweiten Außenpaneel (872, 1472) liegenden Sperrkörperverbundausnehmung (876) umfasst,

- wobei eine Innenform der Sperrkörperverbundausnehmung (876) zu einer Außenform des Sperrkörperverbunds (100, 200, 300, 400, 500, 600, 700, 800, 900, 1000, 1100, 1200, 1300, 1400) und/oder des Sperrkörperverbundsets (662) korrespondiert, derart, dass der Sperrkörperverbund (100, 200, 300, 400, 500, 600, 700, 800, 900, 1000, 1100, 1200, 1300, 1400) oder das Sperrkörperverbundset (662) in die Sperrkörperverbundausnehmung (876) einsetzbar ist.

11. Durchgangssperre (1487) eines Zugangskontrollsystems (1490), umfassend:

   - mindestens eine Basis (1492), und
   - mindestens eine zwischen einer geöffneten Position und einer geschlossenen Position bewegbar an der Basis (1492) befestigte Sperrkörperanordnung (266, 866, 1466) nach einem der vorherigen Ansprüche 9 bis 10.

12. Durchgangssperre (1487) nach Anspruch 11, **dadurch gekennzeichnet, dass**

   - die Durchgangssperre (1487) mindestens eine Lichtquellensteuerung (1496) umfasst, eingerichtet zum Ansteuern der Lichtquellenvorrichtung (234), basierend auf mindestens einem vorgegebenen Zeitansteuerungsablaufmuster,
   - wobei das Zeitansteuerungsablaufmuster zumindest einen ersten Aktivierungsstartzeitpunkt und eine erste Aktivierungszeitdauer der ersten Lichtquellenanordnung (236, 936, 1036, 1136, 1236, 1336), einen zweiten Aktivierungsstartzeitpunkt und eine zweite Aktivierungszeitdauer der zweiten Lichtquellenanordnung (238, 938, 1038, 1138, 1238, 1338) und ein Wiederholungskriterium vorgibt.

13. Durchgangssperre (1487) nach Anspruch 12, **dadurch gekennzeichnet, dass**

   - das Zeitansteuerungsablaufmuster einen ersten Farbcode für den ersten Aktivierungsstartzeitpunkt der ersten Lichtquellenanordnung (236, 936, 1036, 1136, 1236, 1336) und einen zweiten Farbcode für den zweiten Aktivierungsstartzeitpunkt der zweiten Lichtquellenanordnung (238, 938, 1038, 1138, 1238, 1338) vorgibt,
   und/oder
   - mindestens ein erstes Zeitansteuerungsablaufmuster und mindestens ein zweites sich von dem ersten Zeitansteuerungsablaufmuster unterscheidendes Zeitansteuerungsablaufmuster vorgegeben ist, und
   - die Lichtquellensteuerung (1496) eingerichtet ist zum Auswählen eines der gespeicherten Zeitansteuerungsablaufmuster, basierend auf einem Betriebszustand der Durchgangssperre (1487).

14. Verfahren zum Betreiben einer Durchgangssperre (1487) nach einem der vorherigen Ansprüche 11 bis 13, umfassend:

   - Ansteuern, durch eine Lichtquellensteuerung (1496), der Lichtquellenvorrichtung (234) der Sperrkörperanordnung (266, 866, 1466), basierend auf einem Zeitansteuerungsablaufmuster,
   - wobei das Zeitansteuerungsablaufmuster zumindest einen ersten Aktivierungsstartzeitpunkt und eine erste Aktivierungszeitdauer der ersten Lichtquellenanordnung (236, 936, 1036, 1136, 1236, 1336), einen zweiten Aktivierungsstartzeitpunkt und eine zweite Aktivierungszeitdauer der zweiten Lichtquellenanordnung (238, 938, 1038, 1138, 1238, 1338) und ein Wiederholungskriterium vorgibt.

15. Verfahren zum Betreiben einer Durchgangssperre (1487) nach Anspruch 18:

   - wobei das Zeitansteuerungsablaufmuster einen ersten Farbcode für den ersten Aktivierungsstartzeitpunkt der ersten Lichtquellenanordnung (236, 936, 1036, 1136, 1236, 1336) und einen zweiten Farbcode für den zweiten Aktivierungsstartzeitpunkt der zweiten Lichtquellenanordnung (238, 938, 1038, 1138, 1238, 1338) vorgibt.

Fig.1b

Fig.1a

Fig.2

Fig.3

Fig.4

Fig.5

Fig.6

Fig.7a

Fig.7b

866

868

872

800

864

870

876

**Fig.8a**

874

870

872

816

814

804

802

878

878

822

864

**Fig.8b**

924  αv  930

900

936  938

936  938

936  938

936  938

902  904

**Fig.9**

**Fig.10a**

**Fig.10b**

**Fig.11**

Fig.12

Fig.13

EP 4 434 743 A1

Fig.14

EP 4 434 743 A1

Fig.15

Europäisches
Patentamt

European
Patent Office

Office européen
des brevets

## EUROPÄISCHER RECHERCHENBERICHT

**Nummer der Anmeldung**

EP 24 16 0817

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2017/205552 A1 (GIERENS ANNE [DE] ET AL) 20. Juli 2017 (2017-07-20) * Abbildungen 1-9 * * Ansprüche 1-35 * * Absatz [0501] - Absatz [0819] * ----- | 1-15 | INV. B32B7/05 B32B7/12 B32B27/08 B32B27/30 B32B27/36 |

**RECHERCHIERTE SACHGEBIETE (IPC)**

B32B

Der vorliegende Recherchenbericht wurde für alle Patentansprüche erstellt

| Recherchenort | Abschlußdatum der Recherche | Prüfer |
|---|---|---|
| Den Haag | 16. Juli 2024 | Yu, Qianqian |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
  Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 24 16 0817

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-07-2024

| Im Recherchenbericht angeführtes Patentdokument | Datum der Veröffentlichung | Mitglied(er) der Patentfamilie | Datum der Veröffentlichung |
|---|---|---|---|
| US 2017205552 A1 | 20-07-2017 | BR 112016019046 A2 | 15-08-2017 |
| | | CA 2938339 A1 | 13-08-2015 |
| | | CN 106457775 A | 22-02-2017 |
| | | DK 3105052 T3 | 23-07-2018 |
| | | EA 201691609 A1 | 31-10-2017 |
| | | EP 3105052 A1 | 21-12-2016 |
| | | ES 2677596 T3 | 03-08-2018 |
| | | JP 6457554 B2 | 23-01-2019 |
| | | JP 2017514181 A | 01-06-2017 |
| | | KR 20160120751 A | 18-10-2016 |
| | | US 2017205552 A1 | 20-07-2017 |
| | | WO 2015118280 A1 | 13-08-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20170205552 A1